# EUROPÄISCHE PATENTSCHRIFT

(11) **EP 3 652 417 B1**
(45) Veröffentlichungstag und Bekanntmachung des Hinweises auf die Patenterteilung: **28.12.2022**
(21) Anmeldenummer: 18745841.9
(22) Anmeldetag: 10.07.2018
(51) Int. Cl.: F01B 25/02, F04B 39/08

(54) **VERFAHREN UND VORRICHTUNG ZUM ENTSPANNEN EINES GASES MIT EINER HUBKOLBENMASCHINE**
METHOD AND DEVICE FOR EXPANDING A GAS WITH A RECIPROCATING-PISTON MACHINE
PROCÉDÉ ET DISPOSITIF POUR DÉTENDRE UN GAZ AU MOYEN D'UN MOTEUR À PISTON

(30) Priorität: 10.07.2017 EP 17180429
(43) Veröffentlichungstag der Anmeldung: 20.05.2020
(73) Patentinhaber: Burckhardt Compression AG, 8404 Winterthur (CH)
(72) Erfinder: VOSER, Alexandre, 8352 Elsau (CH)
(74) Vertreter: Hepp Wenger Ryffel AG
(86) Internationale Anmeldenummer: PCT/EP2018/068723
(87) Internationale Veröffentlichungsnummer: WO 2019/011950

(56) Entgegenhaltungen:
- WO-A1-2009/074800
- WO-A1-2011/009880
- GB-A- 2 482 416
- US-A1- 2013 032 743

## Beschreibung

Die Erfindung betrifft ein Verfahren sowie eine Vorrichtung zum Entspannen eines Gases mit einer Hubkolbenmaschine.

### Stand der Technik

Bei Hubkolbenkompressoren werden überwiegend selbsttätig arbeitende, durch Druckdifferenzen gesteuerte Ventile eingesetzt um ein Fluid mit Hilfe eines in einem Zylinder hin- und her beweglichen Kolbens zu verdichten. Nebst solchen selbsttätigen Ventilen ist aus dem Dokument WO 01 /59266A1 ein zwangsgesteuertes Drehschieberventil bekannt, welches in Kombination mit einem Hubkolbenkompressor und bei entsprechender Ansteuerung die Menge des vom Hubkolbenkompressor komprimierten Gases regeln kann. Dieses Drehschieberventil weist den Nachteil auf, dass der Verschleiss während des Betriebs relativ gross ist, und dass der Einsatzbereich des Drehschieberventils und der damit betriebenen Hubkolbenmaschine beschränkt ist.

Die US 2013/032743 A1 offenbart ein Energiespeichersystem, bei welchem Energie in Form von komprimiertem Gas gespeichert wird, wobei das komprimierte Gas über ein Ventil einem Hubkolbenkompressor zugeführt wird, sodass die im Gas gespeicherte Energie über die sich drehende Kurbelwelle des Hubkolbenkompressors abführbar ist, indem die Kurbelwelle beispielsweise einen Elektrogenerator antreibt, welcher elektrische Energie erzeugt. Es werden beispielsweise rotierende Ventile, aufweisend eine gegenüber einem feststehenden Gehäuse rotierende Platte, beschrieben, um unter Druck stehendes Gas einem Hubkolbenkompressor zuzuführen, damit dieses unter Druck stehende Gas im Hubkolbenkompressor entspannt wird.

### Darstellung der Erfindung

Aufgabe der Erfindung ist es den Einsatzbereich von Hubkolbenmaschinen zu erweitern.

Diese Aufgabe wird gelöst mit einem Verfahren aufweisen die Merkmale von Anspruch 1. Die abhängigen Ansprüche 2 bis 11 betreffen weitere, vorteilhafte Verfahrensschritte. Die Aufgabe wird weiter gelöst mit einer Hubkolbenmaschine aufweisend die Merkmale von Anspruch 12. Die abhängigen Ansprüche 12 bis 15 betreffen weitere, vorteilhafte Ausgestaltungen.

Die Aufgabe wird insbesondere gelöst mit einem Verfahren zum zum Betrieb einer Hubkolbenmaschine, wobei die Hubkolbenmaschine einen hin und her beweglichen Kolben sowie einen durch den beweglichen Kolben begrenzten Arbeitsraum umfasst, indem ein unter einem Gasdruck stehendes Druckgas über ein ansteuerbares Drehschieberventil dem Arbeitsraum zugeführt wird und das Drehschieberventil anschliessend geschlossen wird, indem der Kolben bis zu einem unteren Totpunkt bewegt wird und dabei das sich im Arbeitsraum befindliche Druckgas im Arbeitsraum entspannt wird, indem der Kolben zu einem oberen Totpunkt hin bewegt wird und dabei über ein zweites Ventil Gas aus dem Arbeitsraum abgelassen wird, wobei das zweite Ventil bei einem zweiten Ventilschliesswinkel geschlossen wird, bei welchem sich eine Gasrestmenge im Arbeitsraum befindet, indem der Kolben weiter zum obere Totpunkt hin bewegt wird, sodass die Gasrestmenge im Arbeitsraum komprimiert wird und die über dem geschlossenem Drehschieberventil anliegende Druckdifferenz reduziert wird, und wobei das Drehschieberventil einen Ventilsitz mit einer Durchlassöffnung sowie ein Schliesselement zum Schliessen der Durchlassöffnung umfasst, dadurch gekennzeichnet, dass der zweite Ventilschliesswinkel derart gewählt ist, dass die Gasrestmenge im Arbeitsraum im Bereich des oberen Totpunkts bei geschlossenem Drehschieberventil einen Gasdruck aufweist, der dem Gasdruck des Druckgases übersteigt, dass das Schliesselement des Drehschieberventils im Bereich des oberen Totpunkts auf Grund des Gasdrucks der Gasrestmenge selbsttätig bezüglich des Ventilsitzes angehoben wird, und dass das Schliesselement des Drehschieberventils nach dem selbsttätigen Anheben vom Ventilsitz angesteuert gedreht wird, und die Durchlassöffnung freigegeben wird.

Die Aufgabe wird zudem insbesondere gelöst mit einer Hubkolbenmaschine zum Entspannen eines Druckgases, wobei die Hubkolbenmaschine einen hin und her beweglichen Kolben sowie einen durch den beweglichen Kolben begrenzten Arbeitsraum umfasst, sowie umfassend ein ansteuerbares Drehschieberventil und ein ansteuerbares zweites Ventil, sowie umfassend eine Ansteuervorrichtung zum Ansteuern des Drehschieberventils und des zweiten Ventils, wobei das Druckgas über das Drehschieberventil dem Arbeitsraum zugeführt ist, und wobei das sich im Arbeitsraum befindliche Druckgas im Arbeitsraum entspannbar ist, wobei das sich im Arbeitsraum befindliche, entspannte Gas über das zweite Ventil abführbar ist, wobei die Ansteuervorrichtung das zweite Ventil bereits vor einem oberen Totpunkt zwangsgesteuert verschliesst, um eine sich im Arbeitsraum befindliche Gasrestmenge bis zum oberen Totpunkt zu verdichten, und dadurch die im Bereich des oberen Totpunktes am Drehschieberventil anliegende Druckdifferenz zu reduzieren, wobei das Drehschieberventil ein Schliesselement sowie einen Ventilsitz umfasst, wobei das Schliesselement drehbar angeordnet ist und von einem Stellantrieb angetrieben ist, dadurch gekennzeichnet, dass das Schliesselement senkrecht zum Ventilsitz selbsttätig beweglich gelagert ist, sodass das Schliesselement, abhängig vom der auf das Drehschieberventil einwirkenden Druckdifferenz am Ventilsitz anliegt oder bezüglich des Ventilsitzes angehoben ist.

Das erfindungsgemässe Verfahren ermöglicht ein Entspannen eines komprimierten Gases beziehungsweise eines Druckgases von einem höheren Druckniveau auf ein tieferes Druckniveau unter Verwendung einer Hubkolbenmaschine, sodass die Hubkolbenmaschine, welche üblicherweise als Hubkolbenkompressor betrieben wird, als Hubkolbenexpander betreibbar ist. Das erfindungsgemässe Verfahren ermöglicht es, eine bisher nur als Hubkolbenkompressor betreibbare Hubkolbenmaschine auch als Hubkolbenexpander zu betreiben. Das erfindungsgemässe Verfahren zum Betrieb der Hubkolbenmaschine, beziehungsweise die erfindungsgemässe Hubkolbenmaschine, umfasst ein ansteuerbares erstes Ventil, das als Drehschieberventil ausgestaltet ist, zum gesteuerten Zuführen des unter Druck stehenden Druckgases in den Arbeitsraum der Hubkolbenmaschine. Das zugeführte Druckgas wird anschliessend im Arbeitsraum entspannt, und das entspannte Gas wird danach zumindest teilweise aus dem Arbeitsraum ausgestossen. Unter Druck stehende Ventile, wie diese für Hubkolbenmaschinen bzw. für Hubkolbenkompressoren verwendet werden, lassen sich üblicherweise entweder gar nicht öffnen, oder, falls sie sich öffnen lassen, nur unter Aufwendung grosser Kräfte und mit entsprechend hohem Verschleiss. Das erfindungsgemässe Verfahren ermöglicht ein Entspannen des Druckgases mit einer Hubkolbenmaschine, indem das Druckgas über das erste Ventil dem Arbeitsraum der Hubkolbenmaschine zugeführt wird, indem das zugeführte Druckgas anschliessend im Arbeitsraum bis zu einem unteren Totpunkt entspannt wird und anschliessend teilweise über ein ansteuerbares zweites Ventil aus dem Arbeitsraum ausgestossen wird, und indem anschliessend das zweite Ventil geschlossen wird und eine im Arbeitsraum der Hubkolbenmaschine verbliebene Gasrestmenge derart komprimiert wird, dass die über dem ersten Ventil anliegende Druckdifferenz im Bereich des oberen Totpunktes der Hubkolbenmaschine reduziert wird, vorzugsweise derart, dass die beim Öffnen des ersten Ventils über dem erste Ventil anliegende Druckdifferenz im Wesentlichen differenzdrucklos ist. Dadurch ist es möglich das erste Ventil im Bereich des oberen Totpunktes der Hubkolbenmaschine zu öffnen, sodass das Druckgas in den Arbeitsraum der Hubkolbenmaschine einströmen kann, anschliessend im Arbeitsraum expandiert wird, und anschliessend aus dem Arbeitsraum ausgestossen wird. Vorteilhafterweise wird das erste Ventil zudem verschleissarm geöffnet.

Die Erfindung weist den Vorteil auf, dass die Hubkolbenmaschine, welche bisher insbesondere nur als Hubkolbenverdichter betrieben werden konnten, nun auch als Hubkolbenexpander betreibbar ist. Ein weiterer Vorteil ist darin zu sehen, dass das erste Ventil trotz des anliegenden Drucks des Druckgases ansteuerbar geöffnet werden kann. Vorteilhafterweise sind die zum Öffnen des ersten Ventils erforderlichen Kräfte nicht all zu hoch, sodass das erste Ventil insbesondere zeitlich sehr präzise angesteuert geöffnet werden kann.

In dem erfindungsgemässen Verfahren wird das zweite Ventil derart angesteuert, dass die im Arbeitsraum der Hubkolbenmaschine verbliebene Gasrestmenge derart bestimmt ist, dass die Gasrestmenge im Arbeitsraum im Bereich des oberen Totpunkts einen Druck aufweist, der höher ist als der Druck des Druckgases, was zur Folge hat, dass das erste Ventil besonders leicht betätigt werden kann. In dem erfindungsgemässen Verfahren ist das erste Ventil zudem derart als selbsttätiges Ventil ausgestaltet, dass sich dessen Schliesselement vom Ventilsitz abhebt, wenn der Druck im Arbeitsraum höher ist als der Druck des Druckgases. Somit liegt der Schliesselement beim Öffnen nicht mehr am Ventilsitz an, was ein besonders leichtes und zudem ein reibungsfreies oder weitgehend reibungsfreies Öffnen des Schliesselementes ermöglicht. Das erste Ventil ist als Drehschieberventil ausgestaltet, sodass das Schliesselement beim Öffnen, nach dem Abheben, gedreht, vorzugsweise reibungsfrei gedreht werden kann.

Vorteilhafterweise wird die während des Entspannens des Druckgases im Innenraum des Zylinders frei werdende Energie beziehungsweise die während des Entspannens des Druckgases an die Hubkolbenmaschine bzw. den Kolben abgegebene Energie genutzt und abgeführt, zum Beispiel indem die Hubkolbenmaschine über eine von Kolben angetriebene Welle einen elektrischen Generator antreibt, um elektrische Energie zu erzeugen.

In einer besonders vorteilhaften Ausgestaltung wird dieselbe Hubkolbenmaschine je nach Erfordernis ansteuerbar als Hubkolbenverdichter oder als Hubkolbenexpander betrieben, sodass entweder ein Gas zu einem Druckgas komprimiert wird, oder dass ein unter Druck stehendes Druckgas expandiert wird, wobei durch eine entsprechende Ansteuerung der Hubkolbenmaschine beziehungsweise deren Ventile die Hubkolbenmaschine entweder das Gas komprimiert oder das Druckgas expandiert. Eine derartige Hubkolbenmaschine ist zum Beispiel geeignet um einen Gasspeicher zu laden und zu entladen.

Besonders vorteilhaft sind sowohl das erste Ventil als auch das zweite Ventil als Schieberventile ausgestaltet, vorteilhafterweise als linear bewegliche Schieberventile, und besonders vorteilhaft als drehbar bewegliche Drehschieberventile. In einer weiteren Ausführungsform könnte das erste Ventil als Schieberventil ausgestaltet sein, wogegen das zweite Ventil einen Abhebegreifer umfasst, zum ansteuerbaren Schliessen des zweiten Ventils.

In einem vorteilhaften Verfahren kann die Hubkolbenmaschine auch in einem Teillastbetrieb gefahren werden, indem in Arbeitsraum nur eine Teilmenge der maximal möglichen Gasmenge expandiert und/ oder komprimiert wird.

In einer weiteren vorteilhaften Ausgestaltung ist die Hubkolbenmaschine als doppelwirkende Hubkolbenmaschine umfassend zwei gegengleich wirkende Arbeitsräume ausgestaltet. In einem vorteilhaften Verfahren wird die doppelwirkende Hubkolbenmaschine derart betrieben, dass der erste Arbeitsraum als Expansionsraum verwendet wird, um ein Druckgas zu entspannen, und dass der zweite Arbeitsraum als Kompressionsraum verwendet wird, um ein Gas zu verdichten. Vorzugsweise umfasst sowohl der erste als auch der zweite Arbeitsraum je ein ansteuerbares erstes und ein ansteuerbares zweites Ventil. Somit ist es möglich die ersten und zweiten Ventile der beiden Arbeitsräume unabhängig voneinander anzusteuern, und somit das Verdichten beziehungsweise das Entspannen in jedem Arbeitsraum individuell anzusteuern. Somit ist es beispielsweise möglich über den ersten Arbeitsraum eine maximal mögliche Menge Druckgas zu entspannen, und über den zweiten Arbeitsraum nur eine Teilmenge der maximal möglichen Gasmenge zu komprimieren. Ebenso ist es möglich sowohl den ersten Arbeitsraum als auch den zweiten Arbeitsraum in einem Teillastbetrieb zu betreiben. Vorteilhafte Anwendungen des erfindungsgemässen Hubkolbenkompressors sind Kühlmaschinen oder Wärmepumpen.

In einer weiteren vorteilhaften Ausgestaltung umfasst die Hubkolbenmaschine eine Mehrzahl von einfachwirkenden und/ oder doppelwirkenden Kolben mit entsprechenden Arbeitsräumen, in welchen Gase verdichtet und/ oder entspannt werden. Insbesondere kann ein Kolbenkompressor sowohl Zylinder umfassen, in welchen eine Kompression stattfindet, als auch Zylinder, in welchen eine Expansion stattfindet. Zudem ist es möglich, abhängig von den Erfordernissen, in Zylinder wahlweise eine Kompression oder eine Expansion durchzuführen. Vorzugsweise umfasst der Kolbenkompressor eine gemeinsame Kurbelwelle, wobei zumindest einige der zu je einem Zylinder zugeordneten Kolben mit der Kurbelwelle verbunden sind, damit die Kolben beim Komprimieren des Gases Energie von der Kurbelwelle beziehen, und damit die Kolben beim Expandieren des Gases Energie an die Kurbelwelle abgeben.

Die Erfindung wird nachfolgend an Hand von Ausführungsbeispielen im Detail erläutert.

### Kurze Beschreibung der Zeichnungsfiguren

Die zur Erläuterung der Ausführungsbeispiele verwendeten Zeichnungsfiguren zeigen:
- Fig. 1a: schematisch eine Hubkolbenmaschine mit einem Kolben in der Stellung des unteren Totpunkts;
- Fig. 1b: schematisch eine Hubkolbenmaschine mit dem Kolben in der Stellung des oberen Totpunktes;
- Fig. 2: schematisch eine Hubkolbenmaschine mit einem doppelwirkende Kolben;
- Fig. 3: ein P-V Diagramm einer Hubkolbenmaschine während eines Expansionsbetriebs;
- Fig. 4: ein P-V Diagramm einer Hubkolbenmaschine während eines Kompressionsbetriebs;
- Fig. 5: ein P-V Diagramm der Hubkolbenmaschine während einer ersten Variante eines Teillast-Expansionsbetriebs;
- Fig. 6: ein P-V Diagramm der Hubkolbenmaschine während einer zweiten Variante eines Teillast-Expansionsbetriebs;
- Fig. 7: ein ansteuerbares als Drehschieberventil ausgestaltetes erstes Ventil;
- Fig. 8: ein ansteuerbares zweites Ventil;
- Fig. 9: eine perspektivische Ansicht eines Ventilsitzes;
- Fig. 10: eine perspektivische Ansicht eines Schliesselementes;
- Fig. 11: einen Längsschnitt durch einen Ventilverschluss;
- Fig. 12: einen Ventilverschluss in angehobener Geschlossenstellung;
- Fig. 13: einen Ventilverschluss in angehobener Offenstellung;
- Fig. 14: ein P-V Diagramm der Hubkolbenmaschine während einer dritten Variante eines Teillast-Expansionsbetriebs;
- Fig. 15: ein weiteres Ausführungsbeispiel einer Hubkolbenmaschine mit Ventilen;
- Fig. 16: eine Hubkolbenmaschine umfassend vier Kolben;
- Fig. 17: schematisch eine Anordnung zur Verarbeitung eines Fluides.

Grundsätzlich sind in den Zeichnungsfiguren gleiche Teile mit gleichen Bezugszeichen versehen.

### Wege zur Ausführung der Erfindung

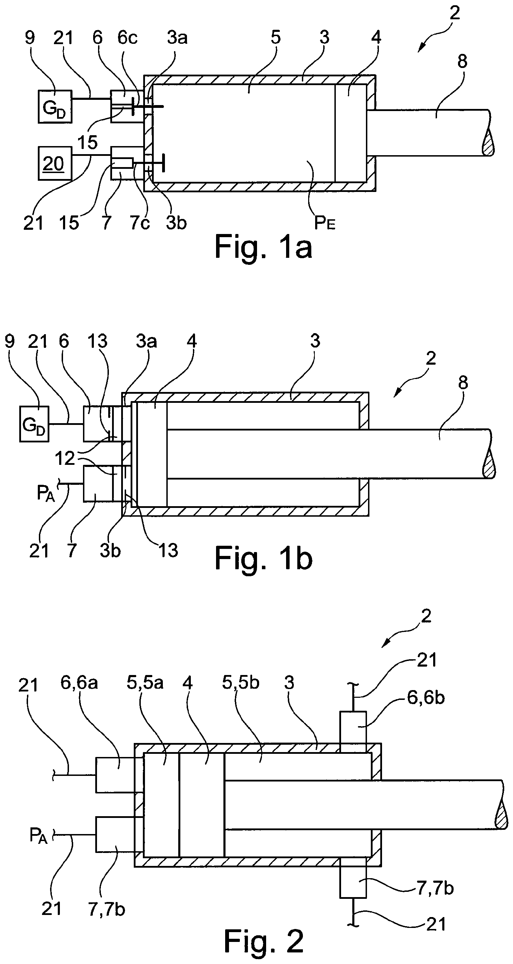

Figur 1a zeigt eine Hubkolbenmaschine 2 umfassend einen Zylinder 3 sowie einen darin hin- und her beweglichen Kolben 4, wobei der Zylinder 3 und der Kolben 4 einen Innenraum 5 begrenzen, wobei der Innenraum 5 über ein als Drehschieberventil ausgestaltetes erstes Ventil 6 und eine Leitung 21 mit einem Druckbehälter 9 verbunden ist, und wobei der Innenraum 5 über ein zweites Ventil 7 und eine Leitung 21 Fluid leitend mit einem Raum 20, beispielsweise einem Aussenraum wie die Atmosphäre mit Druck p_{A} verbunden ist, der einen tieferen Druck aufweist als der Gasdruck p_{D} des Gases G_{D} im Druckbehälter 9. Der Kolben 4 ist über eine Kolbenstange 8 mit einem nicht dargestellten Antrieb verbunden. Figur la zeigt den Kolben 4 in der Stellung eines unteren Totpunkts P₁, das heisst mit dem grösst möglichen Innenraum 5, aufweisend ein Volumen V_{UTP}. Der Zylinder 3 weist an dessen Stirnseite Kanäle 3a, 3b auf, welche Fluid leitend mit den Ventilen 6, 7 verbunden sind. Das erste Ventil 6 ist als Druckventil 6c ausgestaltet, und das zweite Ventil 7 ist als Saugventil 7c ausgestaltet. Das Druckventil 6c und das Saugventil 7c sind mit Hilfe eines nur schematisch dargestellten Linearantriebs 15 in Längsrichtung beweglich antreibbar. Die in den Figuren 1a und 1b dargestellte Hubkolbenmaschine 2 ist, abhängig von der Ansteuerung der Ventile 6 und 7, als Hubkolbenverdichter oder als Hubkolbenexpander betreibbar. Um die in Figur la dargestellte Hubkolbenmaschine 2 als Hubkolbenkompressor zu betreiben könnten das Druckventil 6c und das Saugventil 7c selbsttätig betrieben werden, indem beispielsweise auf den Linearantrieb 15 verzichtet wird oder dieser in einem Leerlaufbetrieb betrieben wird, und indem das zu komprimierende Gas z.B. von der Atmosphäre über das Saugventil 7c angesogen wird, und indem das komprimierte Druckgas über das Druckventil 6c an den Druckbehälter 9 abgegeben wird. Um die in Figur la dargestellte Hubkolbenmaschine 2 als Hubkolbenexpander zu betreiben müssen das erste Ventil 6 und das zweite Ventil 7 ansteuerbar betrieben werden, indem das Druckventil 6c beziehungsweise das Saugventil 7c über den je schematisch dargestellten Antrieb 15 gesteuert geöffnet beziehungsweise geschlossen werden. In Figur la bewirken die Antriebe 15 eine Linearbewegung des Druckventils 6c beziehungsweise des Saugventils 7c, um jeweils eine Schliesselement von einem Ventilsitz abzuheben beziehungsweise an diesen anzupressen.

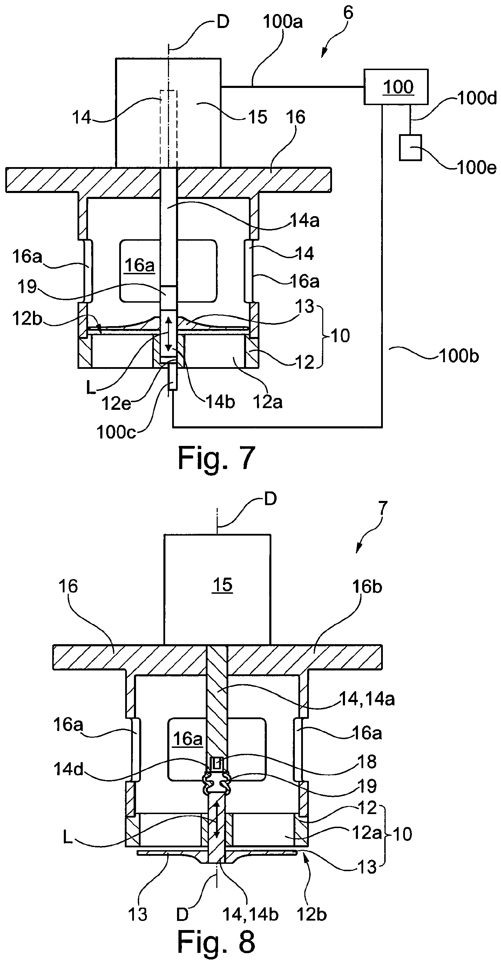

Figur 1b zeigt eine Hubkolbenmaschine 2 mit einer Stellung des Kolbens 4 am oberen Totpunkt P₃, das heisst dem kleinstmöglichen Innenraum 5, aufweisend ein Volumen V_{OTP}. Das am oberen Totpunkt P₃ noch verbleibende Volumen V_{OTP} des Innenraums 5 wird üblicherweise als Schadraum, Totraum oder als Restgas bezeichnet. In den Ausführungsbeispielen gemäss Figur 1b und Figur 2 sind das erste Ventil 6 und das zweite Ventil 7 schematisch dargestellt, wobei diese Ventile 6,7 als Drehschieberventile ausgestaltet sind. Figur 1b zeigt das erste Ventil 6 sowie das zweite Ventil 7 mit je einem Ventilsitz 12 sowie einem drehbar angeordneten Schliesselement 13. In den nachfolgenden Figuren 7 bis 13 sind Details eines Ausführungsbeispiels eines derartigen Drehschieberventils beschrieben.

Figur 2 zeigt eine Hubkolbenmaschine 2 mit einem doppelt wirkenden Kolben 4, indem dieser den Innenraum 5 in einen erste Innenraum 5a und einen zweiten Innenraum 5b unterteilt. Jeder Innenraum 5a, 5b ist über ein entsprechendes als Drehschieberventil ausgestaltetes erstes Ventil 6, 6a, 6b sowie ein entsprechendes zweites Ventil 7, 7a, 7b sowie über Fluidleitungen 21 Fluid leiten mit nicht im Detail dargestellten Räumen verbunden. Die Ventile 6,7 sind vorzugsweise als Drehschieberventile ausgestaltet.

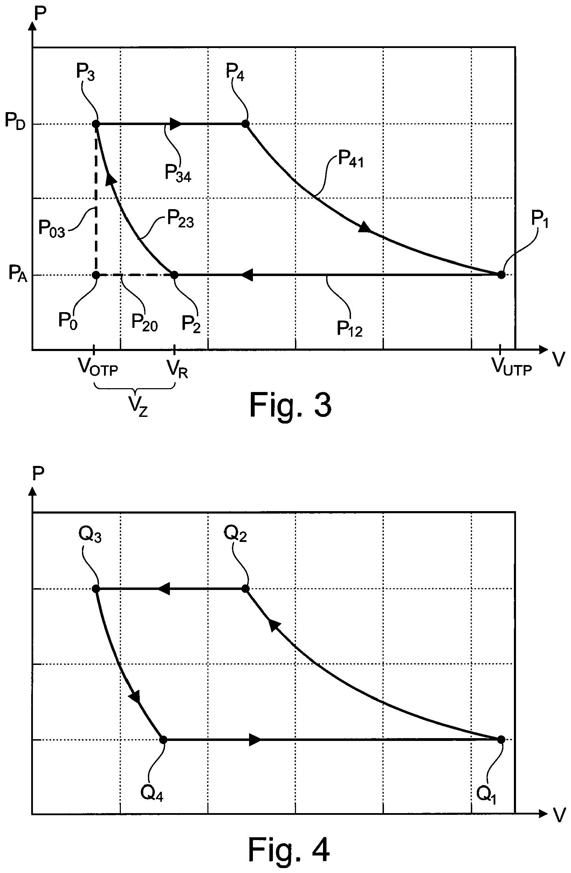

Figur 3 zeigt zwei P-V-Diagramme (P=Druck, V=Volumen) einer Hubkolbenmaschine 2 während eines Expansionsbetriebs, wobei diese P-V-Diagramme mit Hilfe der Hubkolbenmaschine 2 umfassend Drehschieberventile gemäss der Figur 1b erklärt werden. Beim Expansionsbetrieb wird das erste Ventil 6 als Einlassventil betrieben und das zweite Ventil 7 als Auslassventil betrieben, weshalb der Punkt P₂ als zweiter Ventilschliesswinkel P₂ oder als Auslassventilschliesswinkel P₂ bezeichnet wird, und der Punkt P₄ als erster Ventilschliesswinkel P₄ oder als Einlassventilschliesswinkel P₄ bezeichnet wird. In Figur 3 zeigt die Abszisse V die Grösse des Innenvolumens des Innenraums 5, wobei insbesondere das untere Totpunktvolumen V_{UTP} beim unteren Totpunkt P₁, sowie das obere Totpunktvolumen V_{OTP} beim oberen Totpunkt P₃ dargestellt ist. Die Ordinate P zeigt den Druck des Gases im Innenraum 5.

Das in Figur 3 dargestellte, als erstes P-V-Diagramm bezeichnete Diagramm, umfasst die Punkte P₁, P₀, P₃ und P₄, beziehungsweise den diese Punkte verbindenden Streckenzug, beziehungsweise diesen Kreisprozess. Das erste Ventil 6 wird vorzugsweise beim oberen Totpunkt P₃ geöffnet, sodass das im Druckbehälter 9 unter Druck stehendes Druckgas G_{D} in den Innenraum 5 einströmt und der Kolben 4 entlang der Linie P₃₄ zum Punkt P₄ verschoben wird, ab welchem Punkt P₄ das erste Ventil 6 ansteuerbar, und vorzugsweise zwangsgesteuert geschlossen wird. Der Kolben 4 bewegt sich weiter nach rechts, sodass das sich im Innenraum 5 befindliche Gas entlang der Linie P₄₁ bis zum unteren Totpunkt P₁ entspannt wird, bei welchem das zweite Ventil 7 ansteuerbar beispielsweise zum atmosphärischen Druck p_{A} hin geöffnet wird. Der Kolben 4 bewegt sich bei geöffnetem zweiten Ventil 7 anschliessend nach links bis zum Punkt po, an welchem das zweite Ventil 7 ansteuerbar geschlossen wird. Der Kreisprozess folgt der Linie P₀₃, wobei im Punkt P₃ das erste Ventil 6 zwangsgesteuert geöffnet wird, das heisst ansteuerbar zwangsgeöffnet wird, sodass das Druckgas G_{D} wie bereits beschrieben in den Innenraum 5 einströmt. Unter dem Begriff zwangsgesteuert wird verstanden, dass das Ventil ohne Unterstützung durch die über den Ventil anliegende Differenzdruck, das heisst bei beliebiger Druckdifferenz, durch von einem Antrieb einwirkende mechanische Kräfte zwangsweise geöffnet beziehungsweise geschlossen wird.

Nachteilig an diesem ersten P-V-Diagramm ist, dass beim Öffnen des ersten Ventils 6 eine grosse Druckdifferenz über dem ersten Ventil 6 anliegt, da der Gasdruck im Innenraum 5 kurz vor dem Öffnen des ersten Ventils 6 etwa dem atmosphärischen Druck p_{A} entspricht. Das erste Ventil 6 lässt sich auf Grund der anliegenden Druckdifferenz nur sehr schwierig öffnen, unter Umständen nur mit erheblichem Kraftaufwand. Falls der Antrieb 15 eine genügend grosse Kraft erzeugt, so kann das erste Ventil 6 somit zwangsgesteuert geöffnet werden, was jedoch den Nachteil ergibt, dass beim Öffnen des ersten Ventils 6 ein erheblicher Verschleiss auftritt. Das zwangsgesteuerte Öffnen des ersten Ventils 6 weist den weiteren Nachteil auf, dass der Gasdruck im Innenraum 5 relativ tief sein kann, sodass die Energie des in den Innenraum 5 einströmenden Gases im Ventil als Ventilverlust vernichtet wird. Vorteilhafterweise ist die Druckdifferenz über dem ersten Ventil 6 beim Öffnen möglichst klein, damit das in den Innenraum 5 einströmende Druckgas den Kolben 4 antreibt, sodass die im Druckgas enthaltene Energie über die Bewegung des Kolbens 4 bzw. über die Hubkolbenmaschine abgeführt werden kann, zum Beispiel indem die Hubkolbenmaschine einen Generator antreibt. Somit kann die im Druckgas enthaltene Energie während der Expansion zurückgewonnen werden.

Das in Figur 3 dargestellte, als zweites P-V-Diagramm bezeichnete Diagramm zeigt einen Kreisprozess beziehungsweise ein Verfahren umfassend die Punkte P₁, P₂, P₃ und P₄. Dieses erfindungsgemässe Verfahren zum Entspannen des sich im Druckbehälter 9 befindlichen Druckgases G_{D} erfolgt dadurch, dass das zweite Ventil 7 bereits vor dem Erreichen des oberen Totpunkts P₃, nämlich am zweiten Ventilschliesswinkel P₂ geschlossen wird, sodass sich beim Punkt P₂ noch eine Gasrestmenge G_{R} bzw. ein Gasrestmengenvolumen V_{R} unter dem Druck p_{A} im Arbeitsraum 5 befindet.

Es ist bekannt, dass eine Hubkolbenmaschine ein Totvolumen, auch als Schadraum bezeichnet aufweist, sodass beispielsweise, wenn sich der Kolben in der Stellung des oberen Totpunktes P₃ befindet, noch ein oberes Totpunktvolumen V_{OTP} in Toträumen wie dem Zylinderinnenraum und in den mit dem Zylinderinnenraum Fluid leitend verbunden Ventilen vorhanden ist. Die Gasrestmenge G_{R} beziehungsweise das Gasrestmengenvolumen V_{R} umfasst beim Entspannungsdruck p_{A} die Gasmenge im Totpunktvolumen V_{OTP} und umfasst zudem ein Zusatzvolumen V_{z} bzw. die dem Zusatzvolumen V_{z} entsprechende Zusatzgasmenge G_{z}. Das Gewicht der Gasrestmenge G_{R} wird während des Komprimierens vom Entspannungsdruck p_{A} zum Gasdruck beim oberen Totpunkt P₃ beibehalten, wogegen das Volumen der Gasrestmenge G_{R} beim oberen Totpunkt P₃ dem Totpunktvolume V_{OTP} entspricht. Beim Komprimieren zum Punkt P₃ wird somit das Gewicht der Gasrestmenge GR beibehalten, wogegen das beim Punkt P₂ unter dem Druck p_{A} vorhandene Gasrestmengenvolumen V_{R} auf Grund des ansteigenden Drucks reduziert wird. Diese Gasrestmenge GR beziehungsweise dessen Gasrestmengevolumen V_{R} umfasst beim Druck p_{A}, wie in Figur 3 dargestellt, das Volumen V_{OTP} sowie das Zusatzvolumen V_{z}, wobei das Zusatzvolumen V_{z} wie in Figur 3 dargestellt, beim Druck p_{A} der Volumendifferenz zwischen den Punkten P₂ und P₀ entspricht. Das Zusatzvolumen V_{z} entspricht einer Zusatzgasmenge, wobei das Gewicht der Zusatzgasmenge beziehungsweise das Gewicht der Gasrestmenge G_{R} beim Komprimieren von Punkt P₂ zu P₃ konstant bleibt, während das Gasrestmengevolumen V_{R} der Gasrestmenge G_{R} am oberen Totpunkt P₃ auf das Volumen V_{OTP} reduziert wird. Dieses Komprimieren der Gasrestmenge G_{R} hat zur Folge, dass am oberen Totpunkt P₃ die über dem ersten Ventil 6 anliegende Druckdifferenz reduziert wird. Das erste Ventil 6 wird im Bereich des oberen Totpunktes P₃ vorzugsweise gesteuert geöffnet, sodass das Druckgas G_{D} bei geöffnetem erstem Ventil 6 in den Arbeitsraum 5 einströmt, wobei sich der Kolben 4 nach Erreichen des oberen Totpunkts wieder in Richtung zum unteren Totpunkt hin bewegt, das heisst in der Darstellung gemäss Figur 3 nach rechts bewegt. Das erste Ventil 6 wird anschliessend beim erster Ventilschliesswinkel P₄ wieder gesteuert geschlossen, und das sich im Arbeitsraum 5 befindliche Gas entlang der Kurve P₄₁ entspannt, bis das zweite Ventil 7 im Bereich des unteren Totpunkts P₁ geöffnet wird. Anschliessend bewegt sich der Kolben 4 wieder zum oberen Totpunkt hin, in der Darstellung gemäss Figur 3 nach links, wobei das sich im Arbeitsraum 5 befindliche Gas solange über das zweite Ventil 7 ausgestossen wird, bis das zweite Ventil 7 beim zweiten Ventilschliesswinkel P₂ wieder gesteuert geschlossen wird. Wenn hierin beschreiben wird, dass das erste Ventil 6 im Bereich des oberen Totpunktes P₃ gesteuert geöffnet wird, und das zweite Ventil 7 im Bereich des unteren Totpunkts P₁ gesteuert geöffnet wird, so ist unter dem Begriff "Bereich" ein Kurbelwellenwinkelbereich von +/- einem vorgegebenen Winkel, zum Beispiel +/- 10° und vorzugsweise +/- 5° zu verstehen, bezüglich dem oberen Totpunkt P₃ beziehungsweise dem unteren Totpunkt P₁. Das erfindungsgemässe Verfahren erfordert somit nicht, dass das erste bzw. zweite Ventil 6,7 exakt beim oberen Totpunkt P₃ bzw. beim unteren Totpunkt P₁ gesteuert geöffnet wird. Es reicht aus, wenn das erste bzw. das zweite Ventil 6,7 im Bereich dieser Totpunkte geöffnet wird, beispielsweise in einem Bereich +/- 5° um diesen Totpunkte. Der Kurbelwellenwinkel ist durch das Drehen des Antriebs der Hubkolbenmaschine 2 vorgegeben, wobei der obere Totpunkt P₃ des Kolbens 4 einem Kurbelwellenwinkel von 0° beziehungsweise 360° und der untere Totpunkt P₁ des Kolbens 4 einem Kurbelwellenwinkel von 180° entspricht. Da das erste Ventil 6 und das zweite Ventil 7 vorzugsweise mit dem Antriebsmittel 15 gesteuert geöffnet und geschlossen werden, kann der effektive Winkel, bei welchem das Ventil 6,7 geöffnet beziehungsweise geschlossen wird, durch die Ansteuervorrichtung 100 bestimmt beziehungsweise vorgegeben werden. Abhängig von Verfahrensparametern der Hubkolbenmaschine, wie zum Beispiel Drehgeschwindigkeit der Hauptwelle, Reaktionszeit der Ventile 6,7, selbsttätiges Abheben des Drehventils usw. kann es sich als vorteilhaft erweisen das erste Ventil 6 kurz vor dem Erreichen des oberen Totpunkts P₃, beim oberen Totpunkt P₃, oder kurz nach Erreichen des oberen Totpunkts P₃ gesteuert zu öffnen, beziehungsweise kann es sich als vorteilhaft erweisen das zweite Ventil 7 kurz vor dem Erreichen des unteren Totpunkts P₁, beim unteren Totpunkt Pi, oder kurz nach Erreichen des unteren Totpunkts P₁ gesteuert zu öffnen.

Das erste Ventil 6 und das zweite Ventil 7 sind vorzugsweise als Drehschieberventile 10 ausgestaltet, wobei das Drehschieberventil 10 durch ein Drehen eines Schliesselements 13 gesteuert geöffnet und gesteuert geschlossen werden kann. Ein solches Ausführungsbeispiel eines ansteuerbaren ersten Ventils 6 ist in Figur 7 dargestellt, und ein Ausführungsbeispiel eines ansteuerbaren zweiten Ventils 7 in Figur 8.

Der Druck im Innenraum 5 am oberen Totpunkt P₃, und damit die beim Öffnen des ersten Ventils 6 über diesem anliegende Druckdifferenz, wird bestimmt durch das Volumen und den Druck der Gasrestmenge G_{R} am Punkt P₂, bei welcher das zweite Ventil 7 geschlossen wird, sowie durch die nachfolgende Kompression, hervorgerufen durch die Bewegung des Kolbens 4 vom Punkt P₂ zum oberen Totpunkt P₃.

Beim erfindungsgemässen Verfahren wird bei geschlossenem ersten Ventil 6 eine Gasrestmenge G_{R} im Arbeitsraum 5 komprimiert und anschliessend das erste Ventil 6 geöffnet, indem das Druckgas G_{D} bei geöffnetem ersten Ventil 6 in den Arbeitsraum 5 einströmt und das erste Ventil 6 anschliessend geschlossen wird, indem anschliessend das sich im Arbeitsraum 5 befindliche Gas entspannt wird, indem das entspannte Gas über das zweite Ventil 7 aus dem Arbeitsraum 5 ausgestossen wird, und indem das zweite Ventil 7 vor dem Erreichen eines oberen Totpunkts P₃ der Hubkolbenmaschine 2 geschlossen wird, sodass die sich nach dem Schliessen des zweiten Ventils 7 im Arbeitsraum 5 befindliche Gasrestmenge G_{R} komprimiert wird.

Vorteilhafterweise wird das zweite Ventil 7 im Bereich des unteren Totpunkts P₁ geöffnet, vorzugsweise bei 180°, und wird das entspannte Gas anschliessend über das zweite Ventil 7 teilweise aus dem Arbeitsraum 5 ausgestossen, wobei das zweite Ventil 7 bei einem zweiten Ventilschliesswinkel P₂ geschlossen wird, bei welchem sich die Gasrestmenge G_{R} im Arbeitsraum 5 befindet, wobei die Gasrestmenge G_{R} anschliessend im Arbeitsraum 5 verdichtet wird, wobei der im Bereich des oberen Totpunkts P₃ über dem geschlossenen, ersten Ventil 6 anliegende Differenzdruck D_{D} durch zumindest einen der Parameter zweiter Ventilschliesswinkel P₂ und Gasrestmenge G_{R} bestimmt wird. Unmittelbar nach dem Öffnen des ersten Ventils 6 im Bereich des oberen Totpunkte P₃ liegt diese Differenzdruck D_{D} am ersten Ventil 6 an, wobei dieser Differenzdruck D_{D} sich durch das anschliessend in den Arbeitsraum 5 einströmende Druckgas G_{D} verändert.

Der zweiten Ventilschliesswinkel P₂ wird vorteilhafterweise derart vorgegeben, dass die Gasrestmenge G_{R} im Bereich des oberen Totpunkts P₃ im Wesentlichen den Druck P_{D} des Druckgases G_{D} aufweist, sodass das erste Ventil 6 im Bereich des oberen Totpunkts P₃ im Wesentlichen differenzdrucklos oder vollständig differenzdrucklos geöffnet werden kann.

Es kann sich auch als vorteilhaft erweisen, dass die Gasrestmenge G_{R} beziehungsweise der zweiten Ventilschliesswinkel P₂ derart gewählt ist, dass der Arbeitsraum 5 im Bereich des oberen Totpunkts P₃ einen Gasdruck aufweist, der den Druck P_{D} des Druckgases G_{D} übersteigt, sodass das erste Ventil 6 besonders leicht zu öffnen ist.

In einem weiteren, vorteilhaften Verfahren wird das erste Ventil 6 nach dem oberen Totpunkt P₃ bei einem erste Ventilschliesswinkel P₄ geschlossen, bei welchem sich eine Gasexpansionsmenge G_{E} im Arbeitsraum 5 befindet, wobei die Gasexpansionsmenge G_{E} anschliessend im Arbeitsraum 5 entspannt wird, sodass das Gas im Bereich des unteren Totpunktes P₁ einen Entspannungsgasdruck p_{E} aufweist, wobei der bei geschlossenem zweiten Ventil 7 im Bereich des unteren Totpunkts P₁ im Arbeitsraum 5 anliegende Entspannungsgasdruck p_{E} durch zumindest einen der Parameter erster Ventilschliesswinkel P₄ und Gasexpansionsmenge G_{E} bestimmt wird.

In einem weiteren vorteilhaften Verfahren wird der erster Ventilschliesswinkel P₄ derart vorgegeben wird, dass die Gasexpansionsmenge G_{E} im Bereich des unteren Totpunkts P₁ einen Entspannungsgasdruck p_{E} aufweist, der im Wesentlichen dem anliegenden Auslassdruck PA des zweiten Ventils 7, zum Beispiel dem atmosphärischen Druck entspricht, sodass die am zweiten Ventil 7 anliegende Druckdifferenz minimiert wird, und das zweite Ventil 7 vorteilhafterweise im Wesentlichen differenzdrucklos geöffnet wird.

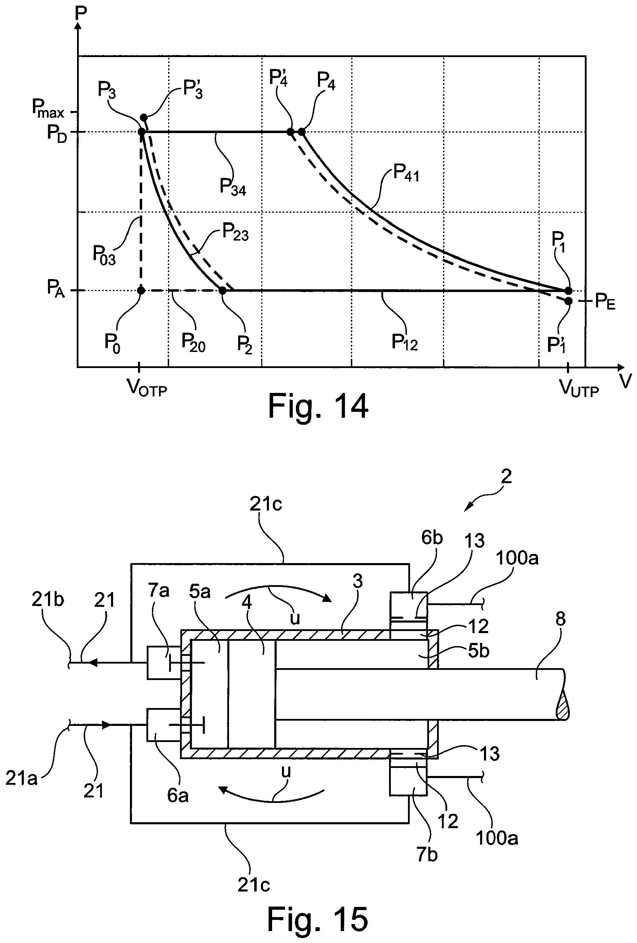

In einem weiteren vorteilhaften Verfahren wird, wie in Figur 14 dargestellt, das zweite Ventil 7 geringfügig vorzeitig geschlossen und der zweite Ventilschliesswinkel P₂ derart gewählt, dass die Gasrestmenge G_{R} im Arbeitsraum 5 im Bereich des oberen Totpunkts P₃ bei geschlossenem ersten Ventil 6 einen Gasdruck pₘₐₓ aufweist, der den Gasdruck P_{D} des Druckgases G_{D} übersteigt.

In einem weiteren vorteilhaften Verfahren wird, wie in Figur 14 dargestellt, das erste Ventil 6 geringfügig vorzeitig geschlossen und der erste Ventilschliesswinkel P₄ derart gewählt ist, dass bei geschlossenem zweiten Ventil 7 die Gasexpansionsmenge G_{E} im Bereich des unteren Totpunkts P₁ einen Entspannungsgasdruck p_{E} aufweist, der kleiner als der Auslassdruck p_{A} des Ventils 7 ist.

Vorteilhafterweise umfass das erste Ventil 6 und/oder das zweite Ventil 7 einen Ventilsitz 12 mit einer Durchlassöffnung 12a sowie ein Schliesselement 13 zum Schliessen der Durchlassöffnung 12a, wobei das Schliesselement 13 des ersten Ventils 6 im Bereich des oberen Totpunkts P₃ auf Grund des Gasdrucks der Gasrestmenge G_{R} selbsttätig bezüglich des Ventilsitzes 12 angehoben wird und/oder dass das Schliesselement 13 des zweiten Ventils 7 im Bereich des unteren Totpunkts P₁ auf Grund des Gasdrucks der Gasexpansionsmenge G_{E} selbsttätig bezüglich des Ventilsitzes 12 angehoben wird. Dieses selbsttätige Anheben wird noch nicht als ein Öffnen des Ventils bezeichnet, da das Schliesselement 13 nur geringfügig angehoben wird, vorzugsweise im Bereich von weniger als ein Millimeter, und somit, falls überhaupt, nur ein vernachlässigbar kleiner Gasdurchfluss durch das Ventil hindurch stattfindet. Das Schliesselement 13 des ersten und/oder des zweiten Ventils 6, 7 wird nach dem selbsttätigen Anheben vom Ventilsitz 12 gesteuert von der Durchlassöffnung 12a wegbewegt, um diese freizugeben und dadurch zu öffnen. Das Schliesselement 13 wird vorzugsweise durch eine Drehbewegung derart entfernt bzw. bewegt, dass die Durchlassöffnung 12a des Ventils freigegeben wird, wobei diese Bewegung auch durch eine Linearbewegung erfolgen könnte.

Vorteilhafterweise umfassen das erste Ventil 6 und/oder das zweite Ventil 7 einen Ventilsitz 12 mit einer Durchlassöffnung 12a sowie ein Schliesselement 13 zum Schliessen der Durchlassöffnung 12a, wobei das erste Ventil 6 und/oder das zweite Ventil 7 als ein Drehschieberventil ausgestaltet ist, und wobei die Durchlassöffnung 12a durch eine Drehen des Schliesselementes 13 geöffnet beziehungsweise geschlossen wird. In einer weiteren möglichen Ausführungsform kann das erste und/oder zweite Ventil 6,7 auch derart ausgestaltet sein, dass sich das Schliesselement 13 nicht senkrecht zum Ventilsitz 12 beweglich ist, sodass kein selbsttätiges Anheben des Schliesselementes 13 möglich ist. Bei dieser Ausführungsform ist das Schliesselement 13 an einen Antrieb 15 gekoppelt, der genügend stark ist, um das Schliesselement 13 des ersten Ventils 6 bzw. des zweiten Ventils 7 zwangsgesteuert zu öffnen und zwangsgesteuert zu schliessen.

In einem weiteren, vorteilhaften Verfahren wird ein Verfahrensparametersollwert Vₛ des ersten Ventils 6 vorgegeben, beispielsweise der Druck im Innenraum 5 im Bereich des oberen Totpunkts P₃. Dazu wird ein Auslassventilschliesswinkelistwert P₂₁ des zweiten Ventils 7 während nacheinander folgenden Hubzyklen variiert und ein Verfahrensparameteristwert V_{I} des erste Ventils 6 in Abhängigkeit des Auslassventilschliesswinkelistwert P_{2I} gemessen, wobei derjenige Auslassventilschliesswinkelistwert P_{2I} als Auslassventilsollschliesswinkel P_{2Soll} bestimmt wird, bei welchem der Verfahrensparameteristwert V_{I} am nächsten beim Verfahrensparametersollwert Vₛ liegt. Beim nachfolgenden kontinuierlichen Betrieb der Hubkolbenmaschine 2 wird dann das zweite Ventil 7 ansteuerbar beim Auslassventilsollschliesswinkel P_{2Soll} geschlossen. Somit kann beispielsweise der im Innenraum 5 auftretende Druck im Bereich des oberen Totpunkts P₃ vorgegeben beziehungsweise eingestellt werden. Dieses Verfahren kann auf analoge Weise auch verwendet werden um einen Verfahrensparametersollwert Vₛ des zweiten Ventils 7 vorzugeben, beispielsweise der Druck im Innenraum 5 im Bereich des unteren Totpunkts P₁.

In einem weiteren möglichen Verfahren wird das Druckgas G_{D} über zumindest zwei in Serie geschaltete Hubkolbenmaschinen 2 entspannt, indem das unter Druck P_{D} stehende Druckgas G_{D} in einer ersten Hubkolbenmaschine auf einen ersten Entspannungsgasdruck P_{E1} entspannt wird, und indem das unter dem Entspannungsgasdruck P_{E1} stehende Gas in einer nachfolgenden, zweiten Hubkolbenmaschine auf einen zweiten Entspannungsgasdruck P_{E2} entspannt wird.

Figur 4 zeigt ein an sich bekanntes P-V Diagramm beziehungsweise einen Kreisprozess einer Hubkolbenmaschine 2 während eines Kompressionsbetriebs. Dabei wird ein Kolben, ausgehend vom Punkt Q1, dem unteren Totpunkt, zum Punkt Q3, dem oberen Totpunkt hin bewegt, wobei ein angesogenes, sich im Arbeitsraum 5 befindliches Gas ausgehend vom Punkt Q , bis zum Punkt Q2 verdichtet wird, wobei das erste Ventil 6 im Punkt Q2 geöffnet wird, und wobei das verdichtete Gas vom Punkt Q2 bis zum Punkt Q3, dem oberen Totpunkt, aus dem Arbeitsraum 5 ausgestossen wird. Dabei wird der Kolben, ausgehend vom Punkt Q3 zum Punkt Ql, dem unteren Totpunkt hin bewegt. Ausgehend vom Punkt Q3 wird das erste Ventil 6 geschlossen und das zweite Ventil 7 beim Punkt Q4 geöffnet, wobei vom Punkt Q4 bis zum Punkt Q 1 ein Gas über das zweite Ventil 7 in den Arbeitsraum 5 angesogen wird und dabei der Arbeitsraum 5 mit Gas gefüllt wird. Im Punkt Q1 wird das zweite Ventil 7 geschlossen, und das Gas im Arbeitsraum 5 komprimiert. Beim erfindungsgemässen Verfahren kann die Hubkolbenmaschine 2 in zwei unterschiedlichen Betriebsmodi, nämlich als Hubkolbenverdichter oder als Hubkolbenexpander betrieben werden, wobei zwischen diesen Betriebsmodi ansteuerbar umgeschaltet werden kann, insbesondere indem das erste und das zweite Ventil 6,7 entsprechend dem gewählten Betriebsmodus ansteuerbar geöffnet und geschlossen werden. Das Verfahren zum Entspannen und zum Verdichten eines Gases G mit der Hubkolbenmaschine 2 erfolgt derart, dass das Gas mit der Hubkolbenmaschine 2 zu dem unter Druck P_{D} stehenden Druckgas G_{D} verdichtet wird, und/ oder dass das unter Druck P_{D} stehende Druckgas G_{D} wieder entspannt wird. Vorteilhafterweise wird die Hubkolbenmaschine 2 derart kontinuierlich betrieben, dass die Hubkolbenmaschine 2 während des kontinuierlichen Betriebs durch eine entsprechende Ansteuerung des erste Ventils 6 und des zweiten Ventils 7 als ein Hubkolbenexpander oder ein Hubkolbenverdichter betrieben wird, wobei durch eine entsprechende Ansteuerung der Ventile vorzugsweise während eines kontinuierlichen Betriebs vom Hubkolbenexpanderbetrieb zum Hubkolbenverdichterbetrieb und umgekehrt umgeschaltet werden kann.

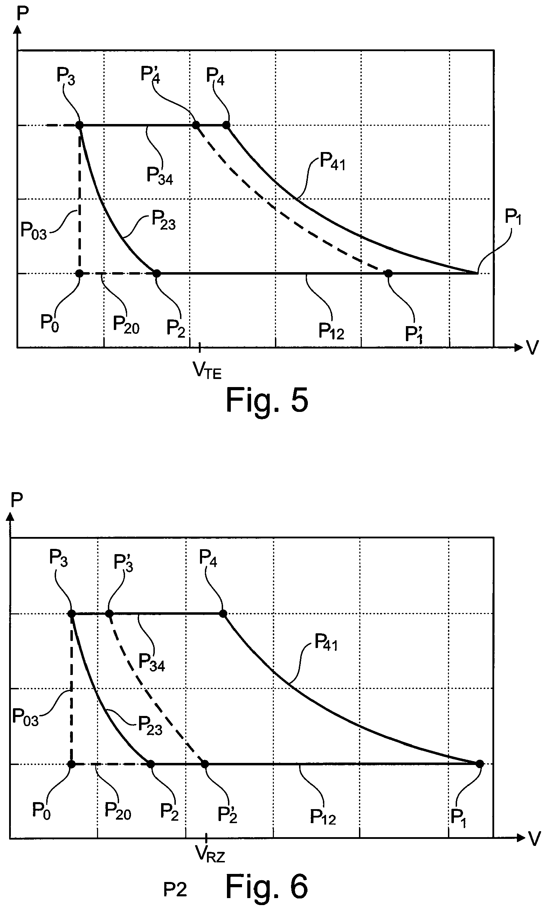

Figur 5 zeigt in einem P-V Diagramm ein weiteres, vorteilhaftes Verfahren, bei welchem die Menge des durch den Hubkolbenexpander 2 entspannten Gas mit Hilfe einer Teillastregelung beeinflusst werden kann. Dabei wird das erste Ventil 6 vorzeitig bei einem ersten Ventilschliesswinkel P'₄ geschlossen, bei welchem sich ein Teilgasvolumen V_{TE} beziehungsweise eine Teilgasexpansionsmenge G_{TE} im Arbeitsraum 5 befindet. Diese Teilgasexpansionsmenge G_{TE} ist kleiner als die beim Punkt P₄ mögliche, maximale Gasexpansionsmenge G_{EMAX}. Die Teilgasexpansionsmenge G_{TE} wird anschliessend expandiert, bis am Arbeitspunkt P'₁ das zweite Ventil 7 geöffnet wird. Somit wird nur eine Teilmenge der maximal möglichen Gasmenge expandiert.

Figur 6 zeigt in einem P-V Diagramm ein weiteres, vorteilhaftes Verfahren, bei welchem die Menge des durch den Hubkolbenexpander 2 entspannten Gases mit Hilfe einer Teillastregelung beeinflusst werden kann. Dabei wird das zweite Ventil 7 vorzeitig bei einem zweiten Ventilschliesswinkel P'₂ geschlossen, bei welchem sich ein Überschussgasvolumen V_{RZ} bzw. eine Überschussgasmenge G_{RZ} im Arbeitsraum 5 befindet. Dies hat zur Folge, dass der Gasdruck im Arbeitsraum 5 den Druck p_{D} im Druckbehälter 9 bereits beim Punkt P'₃ übersteigt, sodass das erste Ventil 6 geöffnet werden kann, und vorzugsweise selbsttätig oder zwangsgeöffnet wird, und die Überschussgasmenge G_{RZ} vorerst in den Druckbehälter 9 gepresst wird, bevor, nach dem oberen Totpunkt P₃, wieder Gas über das erste Ventil 6 in den Arbeitsraum 5 einströmen kann. Es ist zudem möglich die beiden in Figur 5 und 6 dargestellten Verfahren zu kombinieren, um zum Beispiel besonders kleine Gasmengen zu expandieren.

In einem weiteren, vorteilhaften Verfahren umfasst die Hubkolbenmaschine 2, wie in Figur 2 dargestellt, einen doppelt wirkenden Kolben 4, welcher den Innenraum 5 in einen ersten Innenraum 5a und einen zweiten Innenraum 5b unterteilt, wobei jedem Innenraum 5a,5b ein erstes Ventil 6 und ein zweites Ventil 7 zugeordnet ist, und sodass gleichzeitig im ersten Innenraum 5a das Gas zum Druckgas G_{D} verdichtet wird und im zweiten Innenraum 5b das Druckgas G_{D} entspannt wird. Zudem könnten unterschiedliche Gase gefördert werden. Bei Verwendung einer Teillastregelung, wie beispielweise mit den Figuren 5 und 6 offenbart, können im ersten Innenraum 5a und im zweiten Innenraum 5b unterschiedliche Gasmengen, falls erforderlich auch mit unterschiedlichen Gasdrücken gefördert werden.

Die Figuren 7 bis 13 zeigen Ausführungsbeispiele von geeigneten Ventilen und deren Komponenten zur Durchführung des erfindungsgemässen Verfahrens. Figur 7 zeigt in einem Längsschnitt ein erstes Ventil 6 umfassend einen Ventilsitz 12 mit Durchlassöffnungen 12a, Stirnseite 12b und Bohrung 12e, sowie umfassend ein um eine Drehachse D drehbares Schliesselement 13 zum Öffnen und Schliessen der Durchlassöffnungen 12a. Der Ventilsitz 12 und das Schliesselement 13 bilden ein Drehschieberventil 10. Das erste Ventil 6 umfasst zudem eine Laterne 16 mit Durchlassöffnungen 16a, und umfasst einen Antrieb 15 zum Drehen einer Welle 14, welche direkt mit dem Schliesselement 13 verbunden sein kann, um dieses anzutreiben. Im dargestellten Ausführungsbeispiel umfasst die Welle ein erstes Wellenteil 14a, eine in Längsrichtung L elastisehe Kupplung 19 sowie ein zweites Wellenteil 14b. Das zweite Wellenteil 14b ist in der Bohrung 12e geführt und ist in Längsrichtung L beweglich. Diese Ausführungsform weist den Vorteil auf, dass sich das Schliesselement 13 bei entsprechenden Druckverhältnissen selbsttätig vom Ventilsitz 12 abheben kann bzw. sich selbsttätig an den Ventilsitz 12 anlegen kann. Ein Sensor 100c misst die Distanz zum zweiten Wellenteil 14b, woraus die Ansteuervorrichtung 100 die Distanz zwischen Schliesselement 13 und Stirnseite 12b des Ventilsitzes 12 bestimmen kann. Die Ansteuervorrichtung 100 ist über die Leitung 100b mit dem Sensor 100c, über die Leitung 100a mit dem Stellantrieb 15, und über die Leitung 100d mit einem Sensor 100e, beispielsweise einem Drehwinkelsensor der Kurbelwelle der Hubkolbenmaschine verbunden. Es können zusätzliche Sensoren und Aktuatoren vorgesehen sein, die mit der Ansteuervorrichtung 100 verbunden sind, und welche die vorhin beschriebenen Verfahrensparameter wie beispielsweise Gasdruck p_{D} oder Entspannungsgasdruck p_{E} messen, oder welche beispielsweise erste oder zweite Ventile 6,7 ansteuern.

In einem weiteren Ausführungsbeispiel könnte auf die Beweglichkeit in Längsrichtung L verzichtet werden, sodass das Schliesselement 13 einzig um die Drehachse D drehbar gelagert ist. Ein Drehen des Schliesselementes 13 hätte bei dieser Ausführungsform zur Folge, dass das Schliesselement 13 entlang der Stirnseite 12b des Ventilsitzes 12 gleitet.

Figur 8 zeigt in einem Längsschnitt ein zweites Ventil 7, das an sich ähnlich ausgestaltet ist wie das erste Ventil 6 gemäss Figur 7, mit dem Unterschied, dass das Schliesselement 13 auf der gegenüberliegenden Seite des Ventilsitzes 12 angeordnet ist. Zudem verläuft die Welle 14 durchgehend durch den Ventilsitz 12. Zudem umfasst die Welle 14 eine Ausnehmung 14d, in welcher ein Sensor 18 angeordnet ist, sowie eine in Längsrichtung L elastische Kupplung 19, sodass das Schliesselement 13 in Längsrichtung L beweglich gelagert ist, wobei die Kupplung 19 bezüglich einer Drehung um die Drehachse D vorzugsweise starr ist. Mit dem Sensor 18 kann beispielsweise die Änderung der Distanz zwischen dem ersten und dem zweiten Wellenteil 14a, 14b beziehungsweise die Lage des Schliesselements 13 bezüglich des Ventilsitzes 12 gemessen werden.

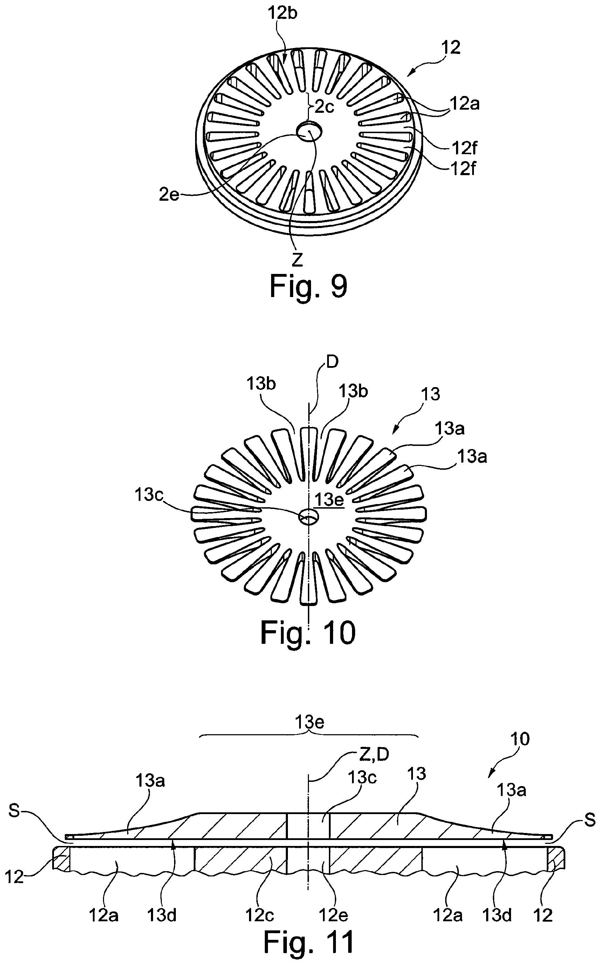

Figur 9 zeigt den Ventilsitz 12 im Detail. Dieser umfasst eine Mehrzahl von Durchlassöffnungen 12a und Stegen 12f, und umfasst eine Stirnseite 12b, eine ringförmige Auflagefläche 12c sowie die Bohrung 12e mit Drehzentrum Z.

Figur 10 zeigt das Schliesselement 13 im Detail. Dieses umfasst eine Mehrzahl von Schliessarmen 13a sowie Zwischenräume 13b, und umfasst eine Nabe 13e sowie eine Zentralbohrung 13c.

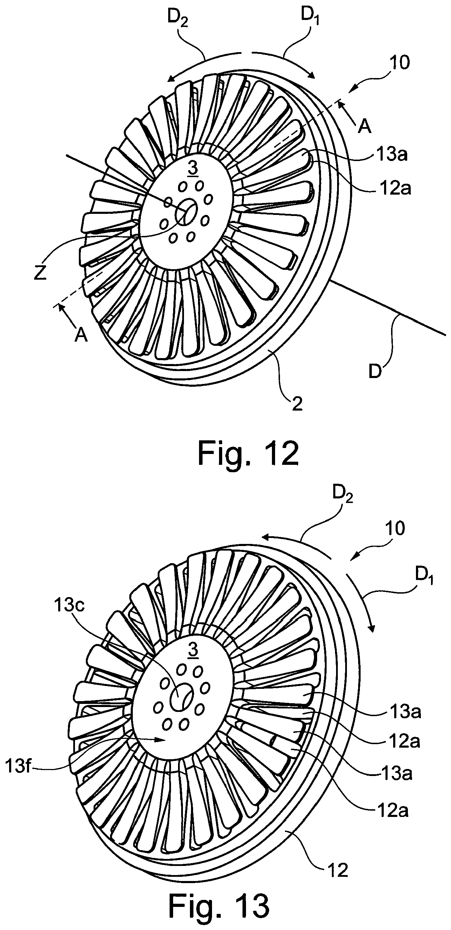

Figur 11 zeigt mit einem Längsschnitt das in Figur 7 dargestellte Drehschieberventil 10 im Detail. Zudem zeigt Figur 11 einen Längsschnitt durch den Ventilsitz 12 gemäss Figur 9 sowie einen Längsschnitt durch das Schliesselement 13 gemäss Figur 10. Das Schliesselement 13, aufweisend eine Dichtfläche 13d, ist gegenüber dem Ventilsitz 12 angehoben, unter Ausbildung eines Spaltes S. Das Schliesselement 13 nimmt diese Stellung bei dem in Figur 7 dargestellten ersten Ventil 6 dann ein, wenn das Schliesselement 13 auf Grund der am Schliesselement 13 anliegenden Druckverhältnisse selbsttätig angehoben wurde. Figur 12 zeigt das Drehschieberventil 10 in dieser Stellung aus perspektivischer Sicht. Der Schnitt entlang der Linie A-A ist zudem in Figur 11 dargestellt. Diese Stellung wird noch nicht als geöffnet bezeichnet, da das Schliesselement 13 erst angehoben ist, die Durchlassöffnung 12a jedoch noch bedeckt ist, und der Gasdurchtritt durch den Spalt S vorzugsweise vernachlässigbar klein ist. Figur 13 zeigt das gegenüber dem Ventilsitz 12 angehobene Schliesselement 13 in vollständig geöffneter Stellung, indem das Schliesselement 13, gegenüber der Stellung gemäss Figur 12, in Drehrichtung D 1 gedreht wurde, und die Durchlassöffnung 12a nicht mehr bedeckt ist und somit vollständig geöffnet ist. Um das Drehschieberventil 10 wieder zu schliessen, muss das Schliesselement 13 in Drehrichtung D2 gedreht werden, bis die Schliesselemente 13 die Durchlassöffnungen 12a vollständig überdecken. Vorteilhafterweise wird das Schliesselement 13 in abgehobener Stellung gedreht, um insbesondere einen Verschleiss zu reduzieren. Das Drehschieberventil 10 kann jedoch auch derart ausgestaltet sein, dass das Schliesselement 13 nicht in Längsrichtung L beweglich ist, sodass das Schliesselement 13 immer am Ventilsitz 12 anliegt und in dieser Stellung bezüglich dem Ventilsitz 12 in Drehrichtung D 1 oder D2 gedreht werden kann, um das Drehschieberventil 10 durch Drehen zwangsgesteuert zu öffnen beziehungsweise zwangsgesteuert zu schliessen. Das Schliesselement ist über die Befestigungsseite 13f mit der Welle 14 verbunden.

Figur 7 zeigt schematisch die Ansteuerung einer Hubkolbenmaschine 2. Die erfindungsgemässe Hubkolbenmaschine 2 umfasst, wie bereits in Figur 1a und 1b beschrieben, einen Zylinder 3 sowie einen darin angeordneten, beweglichen Kolben 4, der im Zylinder 3 einen Arbeitsraum 5 begrenzt, und der zwischen einem unteren Totpunkt P₁ und einem oberen Totpunkt P₃ hin und her beweglich im Zylinder 3 angeordnet. Zudem umfasst die Hubkolbenmaschine 2 ein ansteuerbares erstes Ventil 6 sowie ein ansteuerbares zweites Ventil 7, welche Fluid leitend mit dem Arbeitsraum 5 verbunden sind. Die Ansteuervorrichtung 100 ist Signal leitend mit dem ersten Ventil 6 sowie dem zweiten Ventil 7 verbunden, zum Beispiel durch eine elektrische Leitung 100a zum Ansteuern des Antriebs 15, eine Leitung 100b zum Erfassen der Lage des Schliesselements 3 bezüglich des Ventilsitzes 12 mittels eines Sensors 100c, oder eine Leitung 110d zum Erfassen des Kurbelwellenwinkels der Hubkolbenmaschine 2 mit einem Sensor 100e. Die Ansteuervorrichtung 100 steuert das zweite Ventil 7 derart an, dass dieses bereits vor dem oberen Totpunkt P3, das heisst wie in Figur 3 dargestellt beim Punkt P₂, zwangsgesteuert geschlossen wird, um eine sich im Arbeitsraum 5 befindliche Gasrestmenge G_{R} bis zum oberen Totpunkt P₃ zu verdichten, und dadurch die im Bereich des oberen Totpunktes P₃ am ersten Ventil 6 anliegende Druckdifferenz zu reduzieren, sodass am ersten Ventil 6 vorteilhafterweise eine geringe oder gar keine Druckdifferenz anliegt, wobei in einer besonders vorteilhaften Ausgestaltung der Druck im Innenraum 5 höher ist als im Druckbehälter 9, sodass das Schliesselement 13 im Bereich des oberen Totpunktes P₃ vorzugsweise selbsttätig angehoben wird.

Figur 15 zeigt schematisch eine Hubkolbenmaschine 2 umfassend einen Zylinder 3, einen doppelwirkenden Kolben 4 sowie einen ersten Innenraum 5a und einen zweiten Innenraum 5b. Ein Fluideinlass 21a ist über eine Fluidleitung 21 und ein frei laufenden erstens Ventil 6a Fluid leitend mit dem ersten Innenraum 5a verbunden. Der erste Innenraum 5a ist über ein frei laufendes zweites Ventil 7a und eine Fluidleitung 21 fluidleitend mit dem Fluidauslass 21b verbunden. Das zweite Ventil 7a bzw. die Fluidleitung 21 ist über eine Fluidleitung 21c sowie über ein ansteuerbares Drehschieberventil 6b Fluid leitend mit dem zweiten Innenraum 5b verbunden. Der zweite Innenraum 5b ist über ein ansteuerbares Drehschieberventil 7b und eine Fluidleitung 21c fluidleitend mit dem ersten Ventil 6a bzw. der Fluidleitung 21 verbunden. Die Drehschieberventile 6b und 7b, umfassen je einen Ventilsitz 12 sowie ein Schliesselement 13, sind über eine Signalleitung 100a mit einer nicht dargestellten Ansteuervorrichtung verbunden. Die in Figur 15 dargestellte Anordnung ermöglicht es, die zwischen Einläse 21a und Ausläse 21b geförderte Fluidmenge in einem Bereich zwischen 0% und 100% anzusteuern. Die geförderte Fluidmenge beträgt 100% wenn die ansteuerbaren Drehschieberventile 6b, 7b so angesteuert werden als wären sie frei laufende Ventile, wobei das Ventil 6b ein Auslassventil wäre und das Ventil 7b ein Einlassventil. Um die geförderte Fluidmenge zu reduzieren werden die Drehschieberventile 6b, 7b derart angesteuert, dass zumindest ein Teil des geförderten Fluides in Fluidrichtung u im Kreis gefördert, indem das über das zweite Ventil 7a austretende Fluid teilweise oder sogar vollständig über die Fluidleitung 21c und das Drehschieberventil 6b dem zweiten Innenraum 5b zugeführt wird, und in dem das sich im zweiten Innenraum 5b befindliche Fluid über Drehschieberventil 7b und die Fluidleitung 21c und das erste Ventil 6a wieder dem ersten Innenraum 5a zugeführt wird. Bei einer Förderung von 0% werden die Drehschieberventile 6b, 7b derart angesteuert, dass der gesamte Inhalt vom ersten Innenraum 5a dem zweiten Innenraum 5b zugeführt wird, und indem anschliessend der gesamte Inhalt des zweiten Innenraums 5b wieder dem ersten Innenraum 5a zugeführt wird, sodass über den Fluideinlass 21a und den Fluidauslass 21b kein Fluid oder eine vernachlässigbar kleine Menge Fluid gefördert wird. Somit ist es möglich durch ein entsprechendes ansteuern der Drehschieberventile 6b, 7b die Fördermenge des Fluides zwischen dem Einläse 21a und dem ein dem Ausläse 21b in einem Bereich von 0 bis 100 % zu variieren. Das mit Figur 15 beschriebene Verfahren könnte natürlich auch mit zwei einfach wirkenden Kolben 4 betrieben werden, sodass zum Betrieb zwei Zylinder 3 mit Kolben 4 erforderlich wären.

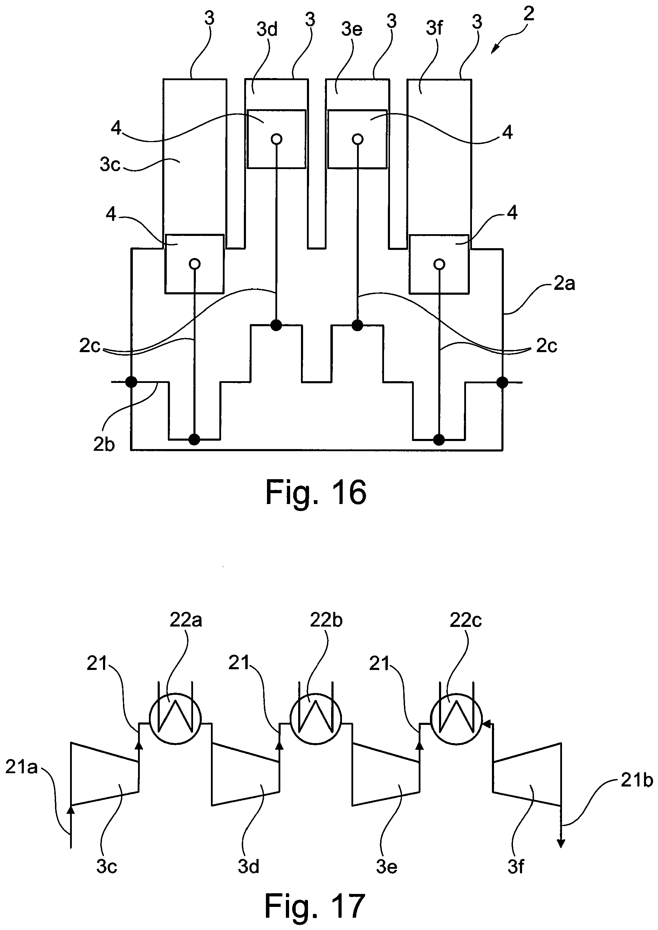

Figur 16 zeigt schematisch ein weiteres Ausführungsbeispiel einer Hubkolbenmaschine 2 umfassend ein Maschinengehäuse 2a, eine gemeinsame Welle 2b sowie eine Mehrzahl von am Maschinengehäuse 2a befestigten Zylindern 3, deren Kolben 4 über je eine Kolbenstange 2c von der gemeinsamen Welle 2b angetrieben sind. Im dargestellten Ausführungsbeispiel umfasst die Hubkolbenmaschine 2 vier Zylinder 3c, 3d, 3e, 3f, wobei die Fluid leitenden Verbindungen sowie die Ventile nicht im Detail dargestellt sind.

Figur 17 zeigt schematisch und beispielhaft eine mögliche Fluid leitende Verschaltung der in Figur 16 dargestellte Hubkolbenmaschine 2, sowie Fluidleitungen 21 sowie einen ersten, einen zweiten sowie einen dritten Kühler 22a, 22b, 22c. Die vier Zylinder 3c,3d,3e,3f können, abhängig von den verwendeten Ventilen sowie deren Ansteuerung, beispielsweise wie in Figur 17 dargestellt derart betrieben werden, dass der erste Zylinder 3c, der zweite Zylinder 3d und der dritte Zylinder 3e als Kompressor betrieben werden, wobei jeder Zylinderausgang über eine Fluidleitung 21 einem nachfolgenden Kühler 22a, 22b, 22c zugeführt wird, und dass der vierte Zylinder 3f als Expander betrieben wird, wobei ein zu verarbeitendes Fluid einem Fluideinlass 21a zugeführt wird und nach der Expansion vom Fluidauslass 21b abgeführt wird. Das Verfahren beziehungsweise die Vorrichtung gemäss der Erfindung weist den Vorteil auf, dass eine Hubkolbenmaschine 2 eine Mehrzahl von Kolben 4 und Zylinder 3 aufweisen kann, zumindest zwei, wobei diese Zylinder 3 abhängig von der jeweiligen Ansteuerung als Kompressor oder als Expander betreibbar sind. Da alle Kolben 4 von einer gemeinsamen Kurbelwelle 2b angesteuert sind ergibt sich der Vorteil, dass die vom als Expander betriebenen Kolben am die gemeinsame Kurbelwelle 2b abgegebene Energie über die Kurbelwelle 2 den als Kompressor betriebenen Kolben 4 direkt zuführbar ist. Die dargestellte Anordnung weist zudem den Vorteil auf, dass durch ein entsprechendes Ansteuern der Ventile jeder der Zylinder 3 wahlweise als Kompressor oder als Expander betreibbar ist, wobei vorzugsweise für jeden Zylinder 3 individuell und unabhängig von den übrigen Zylindern bestimmbar ist, ob dieser als Verdichter oder als Expander betrieben wird.

## Patentansprüche

1. Verfahren zum Betrieb einer Hubkolbenmaschine (2), wobei die Hubkolbenmaschine (2) einen hin und her beweglichen Kolben (4) sowie einen durch den beweglichen Kolben (4) begrenzten Arbeitsraum (5) umfasst, indem ein unter einem Gasdruck (p_{D}) stehendes Druckgas (G_{D}) über ein ansteuerbares Drehschieberventil (6) dem Arbeitsraum (5) zugeführt wird und das Drehschieberventil (6) anschliessend geschlossen wird, indem der Kolben (4) bis zu einem unteren Totpunkt (P₁) bewegt wird und dabei das sich im Arbeitsraum (5) befindliche Druckgas (G_{D}) im Arbeitsraum (5) entspannt wird, indem der Kolben (4) zu einem obere Totpunkt (P₃) hin bewegt wird und dabei über ein zweites Ventil (7) Gas aus dem Arbeitsraum (5) abgelassen wird, wobei das zweite Ventil (7) bei einem zweiten Ventilschliesswinkel (P₂) geschlossen wird, bei welchem sich eine Gasrestmenge (G_{R}) im Arbeitsraum (5) befindet, indem der Kolben (4) weiter zum obere Totpunkt (P₃) hin bewegt wird, sodass die Gasrestmenge (G_{R}) im Arbeitsraum (5) komprimiert wird und die über dem geschlossenem Drehschieberventil (6) anliegende Druckdifferenz reduziert wird, und wobei das Drehschieberventil (6) einen Ventilsitz (12) mit einer Durchlassöffnung (12a) sowie ein Schliesselement (13) zum Schliessen der Durchlassöffnung (12a) umfasst,
**dadurch gekennzeichnet, dass** der zweite Ventilschliesswinkel (P₂) derart gewählt ist, dass die Gasrestmenge (G_{R}) im Arbeitsraum (5) im Bereich des oberen Totpunkts (P₃) bei geschlossenem Drehschieberventil (6) einen Gasdruck aufweist, der dem Gasdruck (p_{D}) des Druckgases (G_{D}) übersteigt, dass das Schliesselement (13) des Drehschieberventils (6) im Bereich des oberen Totpunkts (P₃) auf Grund des Gasdrucks der Gasrestmenge (G_{R}) selbsttätig bezüglich des Ventilsitzes (12) angehoben wird, und dass das Schliesselement (13) des Drehschieberventils (6) nach dem selbsttätigen Anheben vom Ventilsitz (12) angesteuert gedreht wird, und die Durchlassöffnung (12a) freigegeben wird.

2. Verfahren nach Anspruch 1, **dadurch gekennzeichnet, dass** das Drehschieberventil (6) nach dem oberen Totpunkt (P₃) bei einem erste Ventilschliesswinkel (P₄) geschlossen wird, bei welchem sich eine Gasexpansionsmenge (G_{E}) im Arbeitsraum (5) befindet, dass die Gasexpansionsmenge (G_{E}) anschliessend im Arbeitsraum (5) entspannt wird, sodass das Gas einen Entspannungsgasdruck (p_{E}) aufweist, und dass der bei geschlossenem zweiten Ventil (7) im Bereich des unteren Totpunkts (P₁) im Arbeitsraum (5) anliegende Entspannungsgasdruck (p_{E}) durch zumindest einen der Parameter erster Ventilschliesswinkel (P₄) und Gasexpansionsmenge (G_{E}) bestimmt wird.

3. Verfahren nach Anspruch 1 oder 2, **dadurch gekennzeichnet, dass** eine Welle (14) ein erstes Wellenteil (14a), ein zweites Wellenteil (14b) und eine dazwischen angeordnet elastische Kupplung (10) umfasst, dass das Schliesselement (13) mit der Welle (14) verbunden ist und von dieser gedreht wird, und dass die Länge der Welle (14) über die elastische Kupplung (10) verändert wird.

4. Verfahren nach Anspruch 3, **dadurch gekennzeichnet, dass** die Distanz zwischen dem ersten Wellenteil (14a) und dem zweiten Wellenteil (14b) gemessen wird, und dadurch das Abheben des Schliesselementes (13) vom Ventilsitz (12) erfasst wird.

5. Verfahren nach Anspruch 2, **dadurch gekennzeichnet, dass** am Auslass des zweiten Ventils (7) ein Auslassdruck (p_{A}) anliegt, und dass der erste Ventilschliesswinkel (P₄) derart gewählt ist, dass bei geschlossenem zweiten Ventil (7) die Gasexpansionsmenge (G_{E}) im Bereich eines unteren Totpunkts (P₁) einen Entspannungsgasdruck (p_{E}) aufweist, der kleiner als der Auslassdruck (p_{A}) ist.

6. Verfahren nach Anspruch 5, **dadurch gekennzeichnet, dass** das das zweite Ventil (7) einen Ventilsitz (12) mit einer Durchlassöffnung (12a) sowie ein Schliesselement (13) zum Schliessen der Durchlassöffnung (12a) umfasst, und dass das Schliesselement (13) des zweiten Ventils (7) im Bereich des unteren Totpunkts (P₁) auf Grund des Gasdrucks der Gasexpansionsmenge (G_{E}) selbsttätig bezüglich des Ventilsitzes (12) angehoben wird.

7. Verfahren nach Anspruch 6, **dadurch gekennzeichnet, dass** das zweite Ventil (7) als ein zweites Drehschieberventil ausgestaltet ist, und dass das Schliesselement (13) des zweiten Drehschieberventils (7) nach dem selbsttätigen Anheben vom Ventilsitz (12) angesteuert gedreht werden, um die Durchlassöffnung (12a) freizugeben.

8. Verfahren nach einem der Ansprüche 1 bis 7, **dadurch gekennzeichnet, dass** ein Verfahrensparametersollwert (Vs) des Drehschieberventils (6) vorgegeben wird, dass der zweite Ventilschliesswinkel (P₂) während nacheinander folgenden Hubzyklen variiert wird und ein Verfahrensparameteristwert (Vi) des ersten Ventils (6) in Abhängigkeit des zweite Ventilschliesswinkel (P₂) gemessen wird, dass derjenige zweite Ventilschliesswinkel (P₂) als ein zweiter Ventilsollschliesswinkel (P₂ₛₒₗₗ) bestimmt wird, bei welchem der Verfahrensparameteristwert (V_{I}) am nächsten beim Verfahrensparametersollwert (Vs) liegt, und dass das zweite Ventil (7) ansteuerbar beim zweiten Ventilsollschliesswinkel (P_{2Soll}) geschlossen wird.

9. Verfahren nach einem der Ansprüche 1 bis 8, **dadurch gekennzeichnet, dass** zur Fördermengenregelung das Drehschieberventil (6) vorzeitig bei einem ersten Ventilschliesswinkel (P'₄) geschlossen wird, bei welcher sich erst eine Teilgasexpansionsmenge (G_{TE}) im Arbeitsraum (5) befindet, welche kleiner ist als eine maximal mögliche Gasexpansionsmenge (G_{EMAX}).

10. Verfahren nach einem der Ansprüche 1 bis 9, **dadurch gekennzeichnet, dass** zur Fördermengenregelung das zweite Ventil (7) vorzeitig bei einem zweiten Ventilschliesswinkel (P'₂) geschlossen wird, bei welchem sich eine die Gasexpansionsmenge (G_{E}) übersteigende Überschussgasmenge (G_{RZ}) im Arbeitsraum (5) befindet.

11. Verfahren zum Entspannen und zum Verdichten eines Gases (G) mit einer Hubkolbenmaschine (2), indem das Gas (G) mit der Hubkolbenmaschine (2) zu einem unter Gasdruck (p_{D}) stehenden Druckgas (G_{D}) verdichtet wird, und indem das Druckgas (G_{D}) mit einem Verfahren nach einem der Ansprüche 1 bis 10 entspannt wird.

12. Hubkolbenmaschine (2) zum Entspannen eines Druckgases (G_{D}), wobei die Hubkolbenmaschine (2) einen hin und her beweglichen Kolben (4) sowie einen durch den beweglichen Kolben (4) begrenzten Arbeitsraum (5) umfasst, sowie umfassend ein ansteuerbares Drehschieberventil (6) und ein ansteuerbares zweites Ventil (7), sowie umfassend eine Ansteuervorrichtung (100), zum Ansteuern des Drehschieberventils (6) und des zweiten Ventils (7), wobei das Druckgas (G_{D}) über das Drehschieberventil (6) dem Arbeitsraum (5) zugeführt ist, und wobei das sich im Arbeitsraum (5) befindliche Druckgas (G_{D}) im Arbeitsraum (5) entspannbar ist, wobei das sich im Arbeitsraum (5) befindliche, entspannte Gas über das zweite Ventil (7) abführbar ist, wobei die Ansteuervorrichtung (100) das zweite Ventil (7) bereits vor einem oberen Totpunkt (P₃) zwangsgesteuert verschliesst, um eine sich im Arbeitsraum (5) befindliche Gasrestmenge (G_{R}) bis zum oberen Totpunkt (P₃) zu verdichten, und dadurch die im Bereich des oberen Totpunktes (P₃) am Drehschieberventil (6) anliegende Druckdifferenz (D_{D}) zu reduzieren, wobei das Drehschieberventil (6) ein Schliesselement (13) sowie einen Ventilsitz (12) umfasst, wobei das Schliesselement (13) drehbar angeordnet ist und von einem Stellantrieb (15) angetrieben ist, **dadurch gekennzeichnet, dass** das Schliesselement (13) senkrecht zum Ventilsitz (12) selbsttätig beweglich gelagert ist, sodass das Schliesselement (13), abhängig vom der auf das Drehschieberventil (6) einwirkenden Druckdifferenz am Ventilsitz (12) anliegt oder bezüglich des Ventilsitzes (12) angehoben ist.

13. Hubkolbenmaschine nach Anspruch 12, **dadurch gekennzeichnet, dass** das ansteuerbare zweite Ventil (7) als ein Drehschieberventil (10) ausgestaltet ist, umfassend ein Schliesselement (13) sowie einen Ventilsitz (12), wobei das Schliesselement (13) drehbar angeordnet ist und von einem Stellantrieb (15) angetrieben ist, wobei das Schliesselement (13) senkrecht zum Ventilsitz (12) selbsttätig beweglich gelagert ist, sodass das Schliesselement (13), abhängig vom der auf das Drehschieberventil (10) einwirkenden Druckdifferenz am Ventilsitz (12) anliegt oder bezüglich des Ventilsitzes (12) angehoben ist.

14. Hubkolbenmaschine nach einem der Ansprüche 12 oder 13, **dadurch gekennzeichnet, dass** das Drehschieberventil (6) eine Welle (14) sowie einen Antrieb (15) zum Drehen der Welle (14) umfasst, dass die Welle (14) mit dem Schliesselement (13) verbunden ist, und dass die Welle (14) ein erstes Wellenteil (14a), eine in Längsrichtung (L) der Welle (14) elastische Kupplung (19) sowie ein zweites Wellenteil (14b) umfasst.

15. Hubkolbenmaschine nach Anspruch 14, **dadurch gekennzeichnet, dass** in der Welle (4) ein Sensor (18) angeordnet ist, welcher die Distanz zwischen dem ersten und dem zweiten Wellenteil (14a, 14b) misst.

## Claims

1. Method for operating a reciprocating piston engine (2), wherein the reciprocating piston engine (2) comprises a reciprocating piston (4) and a working chamber (5) delimited by the moving piston (4), in that a pressurised gas (G_{D}) under a gas pressure (P_{D}) is supplied to the working chamber (5) via a controllable rotary slide valve (6) and the rotary slide valve (6) is then closed by moving the piston (4) to a bottom dead centre (P₁) and in so doing the pressurised gas (G_{D}) present in the working chamber (5) is expanded in the working chamber (5), in that the piston (4) is moved towards a top dead centre (P₃) and gas is therewith discharged from the working chamber (5) via a second valve (7), the second valve (7) being closed at a second valve closing angle (P₂) at which a residual quantity of gas (G_{R}) is present in the working chamber (5), in that the piston (4) is moved further towards the top dead centre (P₃), so that the residual gas quantity (G_{R} ) in the working chamber (5) is compressed and the pressure difference present across the closed rotary slide valve (6) is reduced, and wherein the rotary slide valve (6) comprises a valve seat (12) with a passage opening (12a) and a closing element (13) for closing the passage opening (12a),
**characterised in that** the second valve closing angle (P₂ ) is selected in such a way that the residual gas quantity (G_{R}) in the working chamber (5) in the region of the top dead centre (P₃) has a gas pressure which exceeds the gas pressure (P_{D}) of the compressed gas (G_{D}) when the rotary slide valve (6) is closed, **in that** the closing element (13) of the rotary slide valve (6) is automatically lifted with respect to the valve seat (12) in the region of the top dead centre (P₃) on account of the gas pressure of the residual gas quantity (G_{R}), and **in that** the closing element (13) of the rotary slide valve (6) is rotated in a controlled manner after being automatically lifted from the valve seat (12), and the passage opening (12a) is released.

2. Method according to claim 1, **characterized in that** the rotary slide valve (6) is closed after the top dead centre (P₃) at a first valve closing angle (P₄) at which a gas expansion quantity (G_{E} ) is present in the working chamber (5), **in that** the gas expansion quantity (G_{E}) is subsequently expanded in the working chamber (5), so that the gas has an expansion gas pressure (p_{E}), and **in that** the expansion gas pressure (p_{E}) present in the region of the bottom dead centre (P₁) in the working space (5) when the second valve (7) is closed is determined by at least one of the parameters first valve closing angle (P₄) and gas expansion quantity (G_{E}).

3. Method according to claim 1 or 2, **characterized in that** a shaft (14) comprises a first shaft part (14a), a second shaft part (14b) and a flexible coupling (10) arranged therebetween, that the closing element (13) is connected to and rotated by the shaft (14), and that the length of the shaft (14) is changed via the flexible coupling (10).

4. Method according to claim 3, **characterized in that** the distance between the first shaft part (14a) and the second shaft part (14b) is measured, and thereby the lifting of the closing element (13) from the valve seat (12) is detected.

5. Method according to claim 2, **characterised in that** an outlet pressure (p_{A}) is present at the outlet of the second valve (7), and **in that** the first valve closing angle (P₄ is selected in such a way that, when the second valve (7) is closed, the gas expansion quantity (G_{E}) in the region of a bottom dead centre (P₁) has an expansion gas pressure (p_{E}) which is lower than the outlet pressure (p_{A}).

6. Method according to claim 5, **characterised in that** the second valve (7) comprises a valve seat (12) with a passage opening (12a) as well as a closing element (13) for closing the passage opening (12a), and **in that** the closing element (13) of the second valve (7) is automatically lifted with respect to the valve seat (12) in the region of the bottom dead centre (P₁) due to the gas pressure of the gas expansion quantity (G_{E}).

7. Method according to claim 6, **characterised in that** the second valve (7) is designed as a second rotary slide valve, and **in that** the closing element (13) of the second rotary slide valve (7) is actuated to be rotated after automatic lifting from the valve seat (12) in order to release the passage opening (12a).

8. Method according to one of claims 1 to 7, **characterized in that** a process parameter setpoint value (Vs) of the rotary slide valve (6) is predetermined, **in that** the second valve closing angle (P₂) is varied during successive stroke cycles, and an actual process parameter value (Vi) of the first valve (6) is measured as a function of the second valve closing angle (P₂), **in that** that second valve closing angle (P₂) is determined as a second valve setpoint closing angle (P_{2Soll}) at which the actual process parameter value (V1) is closest to the process parameter setpoint value (Vs), and **in that** the second valve (7) is closed controllably at the second valve setpoint closing angle (P_{2Soll}).

9. Method according to one of the claims 1 to 8, **characterised in that**, in order to control the delivery rate, the rotary slide valve (6) is closed prematurely at a first valve closing angle (P'₄) at which only a partial gas expansion quantity (G_{TE}) is present in the working chamber (5) which is smaller than a maximum possible gas expansion quantity (G_{EMAX}).

10. Method according to one of the claims 1 to 9, **characterised in that**, for delivery rate control, the second valve (7) is closed prematurely at a second valve closing angle (P'₂) at which an excess gas quantity (G_{RZ}) exceeding the gas expansion quantity (G_{E}) is present in the working chamber (5).

11. Method for expanding and compressing a gas (G) with a reciprocating engine (2), in that the gas (G) is compressed with the reciprocating engine (2) to form a pressurised gas (GD) under gas pressure (p_{D}), and in that the pressurised gas (G_{D}) is expanded with a method according to one of claims 1 to 10.

12. Reciprocating engine (2) for expanding a pressurised gas (G_{D}), the reciprocating engine (2) comprising a reciprocating piston (4) and a working chamber (5) defined by the reciprocating piston (4), and comprising a controllable rotary slide valve (6) and a controllable second valve (7), and comprising a control device (100) for controlling the rotary slide valve (6) and the second valve (7), wherein the compressed gas (G_{D} ) is supplied to the working chamber (5) via the rotary slide valve (6), and wherein the compressed gas (G_{D} ) present in the working chamber (5) can be expanded in the working chamber (5), the expanded gas present in the working chamber (5) being dischargeable via the second valve (7), the control device (100) forcibly closing the second valve (7) even before a top dead centre (P₃) in order to compress a residual gas quantity (G_{R} ) present in the working chamber (5) up to the top dead centre (P₃), and thereby to reduce the pressure difference (D_{D}) present at the rotary slide valve (6) in the region of the upper dead centre (P₃), wherein the rotary slide valve (6) comprises a closing element (13) and a valve seat (12), wherein the closing element (13) is rotatably arranged and is driven by an actuating drive (15),
**characterised in that** the closing element (13) is mounted so as to be automatically movable perpendicularly to the valve seat (12), so that the closing element (13) rests against the valve seat (12) or is lifted with respect to the valve seat (12), depending on the pressure difference acting on the rotary slide valve (6).

13. Reciprocating engine according to claim 12, **characterized in that** the controllable second valve (7) is designed as a rotary slide valve (10), comprising a closing element (13) and a valve seat (12), the closing element (13) being arranged rotatably and being driven by an actuator (15), the closing element (13) being mounted so as to be automatically movable perpendicularly to the valve seat (12), so that the closing element (13) rests against the valve seat (12) or is lifted with respect to the valve seat (12), depending on the pressure difference acting on the rotary slide valve (10).

14. Reciprocating engine according to one of claims 12 or 13, **characterized in that** the rotary valve (6) comprises a shaft (14) and a drive (15) for rotating the shaft (14), that the shaft (14) is connected to the closing element (13), and that the shaft (14) comprises a first shaft part (14a), a coupling (19) elastic in the longitudinal direction (L) of the shaft (14), and a second shaft part (14b).

15. Reciprocating engine according to claim 14, **characterised in that** a sensor (18) is arranged in the shaft (4), which measures the distance between the first and second shaft parts (14a, 14b).

## Revendications

1. Procédé pour faire fonctionner une machine à piston alternatif (2), la machine à piston alternatif (2) comprenant un piston (4) mobile en va-et-vient ainsi qu'une chambre de travail (5) délimitée par le piston mobile (4), en amenant un gaz comprimé (G_{D}) se trouvant sous une pression de gaz (P_{D}) à la chambre de travail (5) par l'intermédiaire d'une soupape à tiroir rotatif (6) pouvant être commandée et en fermant ensuite la soupape à tiroir rotatif (6), en déplaçant le piston (4) jusqu'à un point mort bas (P₁) et en détendant ainsi le gaz comprimé (G_{D}) se trouvant dans la chambre de travail (5), en déplaçant le piston (4) vers un point mort haut (P₃) et en évacuant ainsi du gaz de la chambre de travail (5) par l'intermédiaire d'une deuxième soupape (7), la deuxième soupape (7) étant fermée à un deuxième angle de fermeture de soupape (P₂), auquel une quantité résiduelle de gaz (G_{R}) se trouve dans la chambre de travail (5), en continuant à déplacer le piston (4) vers le point mort haut (P₃), de sorte que la quantité résiduelle de gaz (G_{R}) est comprimée dans la chambre de travail (5) et que la différence de pression s'appliquant sur la soupape à tiroir rotatif (6) fermée est réduite, et dans lequel la soupape à tiroir rotatif (6) comprend un siège de la soupape (12) avec une ouverture de passage (12a) ainsi qu'un élément de fermeture (13) pour fermer l'ouverture de passage (12a),
**caractérisé en ce que** le deuxième angle de fermeture de soupape (P₂) est choisi de telle sorte que la quantité résiduelle de gaz (G_{R}) dans la chambre de travail (5) présente, dans la zone du point mort haut (P₃), lorsque la soupape à tiroir rotatif (6) est fermée, une pression de gaz qui dépasse la pression de gaz (P_{D}) du gaz comprimé (G_{D}), **en ce que** l'élément de fermeture (13) de la soupape à tiroir rotatif (6) est soulevé automatiquement par rapport au siège de la soupape (12) dans la zone du point mort haut (P₃) en raison de la pression de gaz de la quantité résiduelle de gaz (G_{R}), et **en ce que** l'élément de fermeture (13) de la soupape à tiroir rotatif (6) est tourné de manière commandée après le soulèvement automatique par le siège de la soupape (12), et l'ouverture de passage (12a) est libérée.

2. Procédé selon la revendication 1, **caractérisé en ce que** la soupape à tiroir rotative (6) est fermée après le point mort haut (P₃) à un premier angle de fermeture de la la soupape (P₄), auquel une quantité d'expansion de gaz (G_{E}) se trouve dans la chambre de travail (5), **en ce que** la quantité d'expansion de gaz (G_{E}) est ensuite détendue dans la chambre de travail (5), de sorte que le gaz présente une pression de gaz de détente (p_{E}), et **en ce que** la pression de gaz de détente (p_{E}) présente dans la zone du point mort bas (P₁) dans l'espace de travail (5) lorsque la deuxième soupape (7) est fermée est déterminée par au moins l'un des paramètres suivants : premier angle de fermeture de la soupape (P₄) et quantité d'expansion de gaz (G_{E}).

3. Procédé selon la revendication 1 ou 2, **caractérisé en ce qu'**un arbre (14) comprend une première partie d'arbre (14a), une deuxième partie d'arbre (14b) et un accouplement élastique (10) disposé entre elles, **en ce que** l'élément de fermeture (13) est relié à l'arbre (14) et est tourné par celui-ci, et **en ce que** la longueur de l'arbre (14) est modifiée par l'accouplement élastique (10).

4. Procédé selon la revendication 3, **caractérisé en ce que** la distance entre la première partie d'arbre (14a) et la deuxième partie d'arbre (14b) est mesurée, et le soulèvement de l'élément de fermeture (13) du siège de la soupape (12) est ainsi détecté.

5. Procédé selon la revendication 2, **caractérisé en ce qu'**une pression de sortie (p_{A}) est appliquée à la sortie de la deuxième soupape (7), et **en ce que** le premier angle de fermeture de soupape (P₄) est choisi de telle sorte que, lorsque la deuxième soupape (7) est fermée, la quantité d'expansion de gaz (G_{E}) présente, dans la zone d'un point mort bas (P₁), une pression de gaz de détente (p_{E}) qui est inférieure à la pression de sortie (p_{A}).

6. Procédé selon la revendication 5, **caractérisé en ce que** la deuxième soupape (7) comprend un siège de la soupape (12) avec une ouverture de passage (12a) ainsi qu'un élément de fermeture (13) pour fermer l'ouverture de passage (12a), et **en ce que** l'élément de fermeture (13) de la deuxième soupape (7) est soulevé automatiquement par rapport au siège de la soupape (12) dans la zone du point mort bas (P₁) en raison de la pression de gaz de la quantité d'expansion de gaz (G_{E}).

7. Procédé selon la revendication 6, **caractérisé en ce que** la deuxième soupape (7) est conçue comme une deuxième soupape à tiroir rotatif, et **en ce que** l'élément de fermeture (13) de la deuxième soupape à tiroir rotatif (7) est tourné de manière commandée après le soulèvement automatique du siège de la soupape (12) afin de libérer l'ouverture de passage (12a).

8. Procédé selon l'une des revendications 1 à 7, **caractérisé en ce qu'**on prédéfi-nit une valeur de consigne de paramètre de procédé (Vs) de la soupape à tiroir rotative (6), **en ce qu'**on fait varier le deuxième angle de fermeture de la soupape (P₂) pendant des cycles de levage successifs et on mesure une valeur réelle de paramètre de procédé (Vi) de la première la soupape à tiroir rotative (6) en fonction du deuxième angle de fermeture de la soupape (P₂), **en ce que** le deuxième angle de fermeture de soupape (P₂) est déterminé comme deuxième angle de fermeture de soupape de consigne (P_{2Soll}) pour lequel la valeur réelle du paramètre de procédé (V₁) est la plus proche de la valeur de consigne du paramètre de procédé (Vs), et **en ce que** la deuxième soupape (7) est fermée de manière commandable au deuxième angle de fermeture de soupape de consigne (P_{2Soll}).

9. Procédé selon l'une des revendications 1 à 8, **caractérisé en ce que**, pour la régulation du débit, la soupape à tiroir rotative (6) est fermée prématurément à un premier angle de fermeture de la soupape (P'₄) pour lequel il n'y a dans la chambre de travail (5) qu'une quantité partielle d'expansion de gaz (G_{TE}) qui est inférieure à une quantité maximale possible d'expansion de gaz (G_{EMAX}).

10. Procédé selon l'une des revendications 1 à 9, **caractérisé en ce que**, pour la régulation du débit, la deuxième soupape (7) est fermée prématurément à un deuxième angle de fermeture de soupape (P'₂) pour lequel une quantité de gaz excédentaire (G_{RZ} ) dépassant la quantité d'expansion de gaz (G_{E}) se trouve dans la chambre de travail (5).

11. Procédé de détente et de compression d'un gaz (G) avec une machine à piston alternatif (2), en comprimant le gaz (G) avec la machine à piston alternatif (2) en un gaz comprimé (GD) sous pression de gaz (p_{D}), et en détendant le gaz comprimé (G_{D}) avec un procédé selon l'une des revendications 1 à 10.

12. Machine à piston alternatif (2) pour la détente d'un gaz comprimé (G_{D}), la machine à piston alternatif (2) comprenant un piston (4) mobile en va-et-vient ainsi qu'une chambre de travail (5) délimitée par le piston mobile (4), et comprenant une soupape à tiroir rotatif (6) pouvant être commandée et une deuxième soupape (7) pouvant être commandée, et comprenant un dispositif de commande (100) pour commander la soupape à tiroir rotative (6) et la deuxième la soupape (7), le gaz comprimé (G_{D}) étant amené à la chambre de travail (5) par la soupape à tiroir rotative (6), et le gaz comprimé (G_{D}) se trouvant dans la chambre de travail (5) pouvant être détendu dans la chambre de travail (5), le gaz détendu se trouvant dans la chambre de travail (5) pouvant être évacué par la deuxième soupape (7), le dispositif de commande (100) fermant la deuxième soupape (7) par commande forcée déjà avant un point mort haut (P₃ ), afin de comprimer une quantité résiduelle de gaz (G_{R}) se trouvant dans la chambre de travail (5) jusqu'au point mort haut (P₃), et de réduire ainsi la différence de pression (D_{D}) appliquée à la soupape à tiroir rotative (6) dans la zone du point mort haut (P₃), la soupape à tiroir rotative (6) comprenant un élément de fermeture (13) ainsi qu'un siège de la soupape (12), l'élément de fermeture (13) étant disposé de manière rotative et étant entraîné par un servomoteur (15),
**caractérisé en ce que** l'élément de fermeture (13) est monté de manière à pouvoir se déplacer automatiquement perpendiculairement au siège de la soupape (12), de sorte que l'élément de fermeture (13) s'applique contre le siège de la soupape (12) ou est soulevé par rapport au siège de la soupape (12), en fonction de la différence de pression qui agit sur la soupape à tiroir rotative (6).

13. Machine à piston alternatif selon la revendication 12, **caractérisée en ce que** la deuxième soupape (7) pouvant être commandée est conçue comme une soupape à tiroir rotatif (10), comprenant un élément de fermeture (13) ainsi qu'un siège de la soupape (12), l'élément de fermeture (13) étant disposé de manière rotative et étant entraîné par un servomoteur (15), l'élément de fermeture (13) étant monté mobile automatiquement perpendiculairement au siège de la soupape (12), de sorte que l'élément de fermeture (13), en fonction de la différence de pression agissant sur la soupape à tiroir rotative (10), s'applique contre le siège de la soupape (12) ou est soulevé par rapport au siège de la soupape (12).

14. Machine à piston alternatif selon l'une des revendications 12 ou 13, **caractérisée en ce que** la soupape à tiroir rotatif (6) comprend un arbre (14) ainsi qu'un entraînement (15) pour faire tourner l'arbre (14), **en ce que** l'arbre (14) est relié à l'élément de fermeture (13), et **en ce que** l'arbre (14) comprend une première partie d'arbre (14a), un accouplement (19) élastique dans la direction longitudinale (L) de l'arbre (14) ainsi qu'une deuxième partie d'arbre (14b).

15. Machine à piston alternatif selon la revendication 14, **caractérisée en ce qu'**un capteur (18) est disposé dans l'arbre (4), lequel mesure la distance entre la première et la deuxième partie d'arbre (14a, 14b).
